# EUROPEAN PATENT SPECIFICATION

(11) **EP 2 623 531 B1**
(45) Date of publication and mention of the grant of the patent: **16.11.2016**
(21) Application number: 11828980.0
(22) Date of filing: 26.09.2011
(51) Int. Cl.: C08F 299/00, C09K 3/00, F16F 1/36, F16F 15/02, C08L 33/10, C08L 55/00

(54) **COMPOSITION CONTAINING BRANCHED POLYMER FOR VIBRATION-DAMPING MATERIAL**
ZUSAMMENSETZUNG MIT EINEM VERZWEIGTEN POLYMER FÜR EIN SCHWINGUNGSDÄMPFENDES MATERIAL
COMPOSITION CONTENANT UN POLYMÈRE RAMIFIÉ POUR UN MATÉRIAU AMORTISSANT LES VIBRATIONS

(30) Priority: 30.09.2010 JP 2010222043
(43) Date of publication of application: 07.08.2013
(73) Proprietor: Kaneka Corporation, Osaka-shi, Osaka 530-8288 (JP)
(72) Inventor: TAKEDA, Masanao, Settsu-shi Osaka 566-0072 (JP); YOSHIHASHI, Kenichi, Settsu-shi Osaka 566-0072 (JP)
(74) Representative: Hart-Davis, Jason
(86) International application number: PCT/JP2011/071785
(87) International publication number: WO 2012/043426

(56) References cited:
- WO-A1-99/65963
- WO-A1-2008/020614
- JP-A- 5 331 246
- JP-A- 2010 126 578
- JP-A- 2010 196 042

## Description

### Technical Field

The present invention relates to a composition, for damping material, containing a branched polymer.

### Background Art

Damping materials are used in wide fields of acoustic instruments, electrical/electronic appliances, semiconductors, detecting devices, ships, automobiles, camera/office machines, industrial machines, railroads and others to decrease noises or vibrations. Damping materials are designed to be made mainly of polymeric material; examples of the base polymer include butyl rubber, EVA, polynorbornene, silicone gel, polyurethane, epoxy resin, various liquid material and thermoplastic elastomer; and materials excellent in vibration-damping property have been developed by polymer design or blend design (Non-Patent document 1). These damping materials are each a polymeric material, and a simple index for the vibration-damping performance (damping performance) thereof is the tangent loss tanδ obtained by measuring the dynamic viscoelasticity thereof. When the tangent loss tanδ is high, the dynamic viscoelasticity behavior of the material is used to make it possible to dissipate dynamic energy given thereto into the form of thermal or some other energy, thus attenuating the energy. In other words, the damping material referred to herein is defined as a material which can cause energy given thereto to be dissipated. The energy is not limited to vibration or sound, and may be any energy.

In recent years, our living environment is full with noises or vibrations (energies) having various frequencies. Thus, a high-performance polymeric damping material has been required, which is capable of being freely controlled in vibration-damping property. As a rubbery material for giving such a property, known is, for example, acrylic rubber, ethylene acrylate copolymer, polyisoprene rubber, polyisobutylene rubber, polybutadiene rubber, and fluorosilicone.

However, a damping material is desired to be a material that has an elasticity designable into wide elasticities (hardnesses from high hardness to low hardness) as possessed by various materials ranging from rubbery material to thermosetting resin, that has a high energy-dissipating performance, and that is small in a change in these properties which depends on both of temperature and frequency. Polymeric damping materials known in the prior art have, in particular, a property that the materials are generally better in energy-attenuating performance against a higher frequency. Thus, the materials can be materials excellent materials exhibiting a good vibration-damping (attenuating) performance against vibrations in a relatively high frequency range of about 100 Hz to several thousands of hertz. However, the materials do not easily have a sufficient vibration-damping property against vibrations in a very low frequency range of several hertz to several tens of hertz at room temperature, about 20°C.

Thus, in order to solve these problems, various resins for damping material have been suggested. For example, suggested is a rubbery damping material containing a polyolefin-type hot melt resin having a softening point of about 100 to 200°C (Patent document 1). The hot melt resin is an unreactive linear polymer having a high molecular weight. The damping material is obtained by making this resin beforehand in a melted state and then crosslinking/curing a rubber component therein. However, in order to make the high-molecular-weight linear polymer into the melted state, heating and a large volume of a solvent are required to result in a problem about costs when the material is shaped. Thus, an industrial-scale production thereof is uneconomical. Additionally, the use of the solvent or the like may essentially cause phase separation, so that bleeding-out may be caused and other problems about long-term stability may be caused (Patent document 1). Similarly, suggested is a damping material made of a cured substance which is a combination of a (meth)acrylate polymer having an ultrahigh molecular weight with a monomer having a crosslinkable functional group (Patent document 2). However, in order that this material can have a sufficient vibration-damping property against vibrations in a very low frequency range of several hertz to several tens of hertz at room temperature, about 20°C, the polymer is preferably a polymer having an ultrahigh (number-average) molecular weight of 200000 or more. However, a (meth)acrylate polymer having a molecular weight of 100000 or more is generally very high in viscosity, or is a solid. There remains a problem that in order to use this polymer efficiently, it is indispensable from the viewpoint of workability to dissolve the polymer into a solvent such as toluene (Patent document 2).

As described above, in the case of producing a material in which an unreactive linear polymer having a high molecular weight of several hundreds of thousands is confined in a crosslinked rubber network, the obtained material may be a material having a high tangent loss tanδ (dynamic viscoelasticity measurement) at higher temperatures than the glass transition temperature of the crosslinked rubber itself. It can be therefore said to realize a material having a glass transition temperature lower than room temperature and simultaneously having a very high energy dissipating performance against frequencies in a low frequency range in a very wide temperature range (sufficiently higher temperatures than the glass transition temperature). However, there remain problems of the handleability and the workability thereof. In the meantime, the same result would be obtained in the case of producing a material in which an unreactive linear polymer having a relatively low molecular weight (about several tens of thousands) is confined in a crosslinked rubber network although this matter is not described in Patent document 2. The obtained material would be a material having a high tangent loss tanδ (dynamic viscoelasticity measurement) at higher temperatures than the glass transition temperature of the crosslinked rubber itself. These techniques use a matter that the unreactive linear polymers each diffuse in the crosslinked network at a low speed. Thus, when an unreactive linear polymer the molecules of which have a substantially uniform molecular weight is confined in a large quantity into a crosslinked rubber network, a damping material is obtained which is easily handleable, has a peak of a tangent loss tanδ (dynamic viscoelasticity measurement) against frequencies in a specific frequency range in a specific temperature range, and can be freely controlled in vibration-damping performance. However, a linear polymer having a low molecular weight is generally higher in diffusion speed than a linear polymer having a high molecular weight (several hundreds of thousands); thus, the former polymer can be an excellent material exhibiting a good vibration-damping (attenuating) performance against vibrations in a relatively high frequency range of 100 Hz to several thousands of hertz. However, the polymer does not easily have a sufficient vibration-damping property against vibrations in a very low frequency range of several hertz at room temperature, about 20°C. It can be considered from the above-mentioned matters that about any material in which an unreactive linear polymer is confined in a crosslinked rubber network, a limit is generated when this material is designed into a damping material.

Thus, suggested is a curable composition for damping material which contains a polymer having a single crosslinkable functional group, and a polymer having two or more crosslinkable functional groups. Suggested is also a damping material which is in a liquid form and is low in viscosity and good in workability before cured, and which gives a rubbery material high in energy dissipating performance in a wide temperature range after cured (Patent document 3). Unless the charge amount by percentage of the polymer having a single crosslinkable functional group is increased, the damping material tends not to become high in energy dissipating performance. However, a limit is imposed onto the charge amount by percentage of this polymer. If the amount becomes high, the composition becomes extremely low in elasticity to be deteriorated in tackiness. This matter and others evidently make the composition difficult to handle. Accordingly, under actual circumstances, materials as described above are not materials satisfactory from the viewpoint of properties, workability, and costs.

### Prior Art Documents

### Patent Documents

Patent Document 1: JP-A-5-78570
Patent Document 2: JP-A-4-72348
Patent Document 3: JP-A-2000-63638

### Non-Patent Document

Non-Patent Document 1: The Latest Trend of Polymer Damping Materials & Applications (supervised by Hitoshi Nishizawa, CMC Publishing Co., Ltd., published on September 30, 1997)

### DISCLOSURE OF THE INVENTION

### Problems to be Solved by the Invention

An object of the present invention is to solve the above-mentioned problems. In other words, an object thereof is to provide a damping material having an improved vibration-damping (energy-attenuating) performance against vibrations in a low frequency range (several hertz) and a higher frequency range in a specific temperature range near room temperature (-20 to 20°C) while the material maintains a good workability when the material is made into a cured product. Furthermore, according to the invention, the material can be controlled in vibration-damping performance at will to target performances not only in a low-temperature and high-frequency range but also in a very low specific frequency range and a specific temperature range. Furthermore, the material can be designed with a high flexibility, and can be simultaneously improved in physical properties such as elasticity (hardness).

### Means for Solving the Problems

In light of the above-mentioned situation, the inventors have made eager investigations to find out that the problems can be solved by a composition for damping material which contains a branched polymer. Thus, the invention has been attained.

That is, the present invention relates to a composition for damping material, comprising a branched polymer (A), and a resin (B), wherein the content by percentage of the branched polymer (A) is from 15 to 85% both inclusive by weight of the total of the branched polymer (A) and resin (B), and the resin (B) is a chemically crosslinked body and/or a physically crosslinked body.

The branched polymer (A) is preferably a (meth)acrylic polymer.

The branched polymer (A) is preferably a comb polymer, or an irregularly-branched statistic polymer.

The branched polymer (A) preferably has a weight-average molecular weight (Mw) of 10000 or more, the molecular weight being measured by gel permeation chromatography (GPC) and being a molecular weight in terms of that of polystyrene.

The resin (B) is preferably a (meth)acrylic polymer.

The resin (B) preferably has a crosslinkable functional group.

The present invention relates to a rheology adjustor, comprising the branched polymer (A).

The branched polymer (A) is preferably a comb polymer, or an irregularly-branched statistic polymer.

The branched polymer (A) is preferably a (meth)acrylic polymer.

The branched polymer (A) preferably has a weight-average molecular weight (Mw) of 10000 or more, the molecular weight being measured by gel permeation chromatography (GPC) and being a molecular weight in terms of that of polystyrene.

### Effects of the Invention

The damping material of the invention makes it possible to provide a composition for damping material which exhibits a high vibration-damping (energy-attenuating) performance against vibrations in a low frequency range (several hertz) and a higher frequency range in a specific temperature range near room temperature (-20 to 20°C), and which can be designed with a high flexibility and be simultaneously improved in physical properties such as elasticity (hardness).

### PREFERRED MODE FOR CARRYING OUT THE INVENTION

The composition of the present invention for damping material relates to a composition for damping material which comprises a branched polymer (A), and a resin (B), wherein the content by percentage of the branched polymer (A) is from 15 to 85% both inclusive by weight of the total of the branched polymer (A) and resin (B) , and the resin (B) is a chemically crosslinked body and/or a physically crosslinked body. Hereinafter, the composition will be described in detail.

### «About Branched Polymer (A) »

The branched polymer (A) in the invention denotes a polymer having a nonlinear-macromolecule form. Examples thereof are classified into a star polymer, in which three or more branches are radiated from a single center, a comb polymer, in which plural non-ramified branches are bonded to a single trunk, an irregularly-branched statistic polymer, which may be called a Cayley's tree, and others. Their branch(es) is/are generated in various main synthesis steps. The branch(es) is/are produced in an addition polymerization step, or generated by polymerizing or condensing a monofunctional monomer unit and/or a polyfunctional (trifunctional or higher functional) monomer unit.

### <Main Chain>

A monomer unit which constitutes the main chain of the branched polymer (A) related to the invention is not particularly limited, and may be a monomer unit for an organic polymer or an inorganic polymer.

### <Organic Polymer>

Examples of the organic polymer used in the invention include a synthetic polymer, a semi-synthetic polymer, and a natural polymer. These are prepared by various polymerization techniques.

Examples of the synthetic polymer include polystyrene, poly(meth)acryl, polyester, polyamide, polyether, polyurethane, polyvinyl chloride, tetrafluoroethylene, urea resin, phenolic resin, and polyolefin. In order to synthesize such a synthetic polymer, the following monomers may be used alone or in combination: (1) unsaturated carboxylic acids, such as (meth)acrylic acid, maleic acid, crotonic acid, and itaconic acid, (2) (meth)acrylates, such as methyl (meth)acrylate, propyl (meth)acrylate, and butyl (meth)acrylate, (3) (meth)acrylic acid amides, such as (meth)acrylamide, and N-methylol(meth)acrylamide, (4) vinyl esters of any aliphatic carboxylic acid, such as vinyl acetate, vinyl propionate, and vinyl laurate, (5) vinyl ethers of any alcohol, such as vinyl isobutyl ether, and vinyl-n-octyl ether, (6) N-vinyllactams, such as N-vinylcaprolactam, (7) vinyl halide, and vinylidene halide compounds, such as vinyl chloride, and vinylidene chloride, (8) aryl vinyl, and aryl vinylidene compounds, such as styrene, and vinylnaphthalene, (9) vinylnitrile, and cyanovinylidene compounds, such as acrylonitrile, (10) nitrogen heterocyclic compounds, such as vinyl pyrrolidone, and vinyl pyridine, and (11) ethylenically unsaturated compounds, such as butadiene, chloroprene, isoprene, isobutylene, propylene, and butylene. A crosslinking agent may also be used.

Examples of the semi-synthetic polymer include cellulose polymers such as ethylcellulose, methylcellulose, hydroxyethylcellulose, hydroxypropylcellulose, and carboxymethylcellulose; starch polymers such as carboxymethylstarch; alginic acid polymers such as propylene glycol alginate; chitin; and chitosan.

Examples of the natural polymer include plant-origin polymers such as agar and gum Arabic; animal-origin polymers such as gelatin and collagen; natural polysaccharides; and polyamino acids.

Preferred examples of these organic polymers are (meth)acrylic polymers. Examples thereof include (meth)acrylic monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl

(meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, an ethylene oxide adduct of (meth)acrylic acid, trifluoromethylmethyl (meth)acrylate, 2-trifluoromethylethyl (meth)acrylate, perfluoroethylmethyl (meth)acrylate, 2-perfluoroethylethyl (meth)acrylate, perfluoroethylperfluorobutylmethyl (meth)acrylate, 2-perfluoroethyl-2-perfluorobutylethyl (meth)acrylate, perfluoroethyl (meth)acrylate, perfluoromethyl (meth)acrylate, diperfluoromethylmethyl (meth)acrylate, 2,2-diperfluoromethylethyl (meth)acrylate, perfluoromethylperfluoroethylmethyl (meth)acrylate, 2-perfluoromethyl-2-perfluoroethylethyl (meth)acrylate, 2-perfluorohexylmethyl (meth)acrylate, 2-perfluorohexylethyl (meth)acrylate, 2-perfluorodecylmethyl (meth)acrylate, 2-perfluorodecylethyl (meth)acrylate, 2-perfluorohexadecylmethyl (meth)acrylate, and 2-perfluorohexadecylethyl (meth)acrylate. These may be used alone, or two or more thereof may be copolymerized with each other. (Meth)acrylic acid denotes acrylic acid and/or methacrylic acid.

The (meth)acrylic polymer main chain is preferably a main chain produced by polymerizing mainly at least one selected from the above-mentioned (meth)acrylic monomers. The word "mainly" means that the above-mentioned monomer or monomers occupy 50% or more, preferably 70% or more by mole of the monomer unit(s) constituting the (meth)acrylic polymer (A).

Of these (meth)acrylic monomers, preferred are aromatic (meth)acrylic monomers and (meth)acrylic acid monomers from the viewpoint of physical properties of the product and others. More preferred are acrylic ester monomers and/or metacrylic ester monomers. Particularly preferred are acrylate monomers. Specific examples of the particularly preferred acrylic ester monomers include ethyl acrylate, 2-methoxyethyl acrylate, stearyl acrylate, butyl acrylate, 2-ethylhexyl acrylate, and 2-methoxybutyl acrylate. In the invention, these preferred monomers may each be copolymerized with a different monomer, and be further block-copolymerized. At this time, one or more of these preferred monomers are preferably contained in a weight-proportion of 40% or more by weight.

When the composition of the invention is used for ordinary buildings or the like, the composition of the invention as a curable composition is required to have a low viscosity, and a cured product therefrom is required to have low-modulus, high-elongation, weather resistance, heat resistance and other physical properties. From this viewpoint, a butyl acrylate type monomer is more preferred. When the composition of the invention is used for automobiles or the like for which oil resistance and others are required, a copolymer made mainly from ethyl acrylate is more preferred. This polymer made mainly from ethyl acrylate is excellent in oil resistance, but tends to be somewhat poor in low-temperature property (cold resistance). Thus, in order to improve the low-temperature property, a partial amount of ethyl acrylate may be substituted with butyl acrylate. However, with an increase in the proportion of butyl acrylate in the polymer, the polymer is damaged in good oil resistance. Thus, the proportion is preferably low for articles for which oil resistance is required. In order to improve the polymer in low-temperature property and others without damaging the oil resistance thereof, it is preferred to use 2-methoxyethyl acrylate or 2-ethoxyethyl acrylate, in which oxygen is introduced into its side chain. However, the introduction of the alkoxy group, which has an ether bond, to the side chain tends to make the polymer poor in heat resistance; thus, when the polymer is required to have heat resistance, it is preferred that the proportion thereof is low. In accordance with various use purposes and required purposes, an appropriate polymer can be obtained by varying the proportion, considering required physical properties such as oil resistance, heat resistance and low-temperature property. An unrestricted polymer-example excellent in balance between physical properties, such as oil resistance, heat resistance and low-temperature property, is a copolymer of ethyl acrylate/butyl acrylate/2-methoxyethyl acrylate (ratio by mole: 40 to 50%/20 to 30%/30 to 20%). A method for synthesizing the (meth)acrylic polymer will be detailed later.

No especial limitation is imposed onto the molecular weight distribution of the branched polymer (A) related to the invention, that is, the ratio between the weight-average molecular weight (Mw) and the number-average molecular weight (Mn) (Mw/Mn). These molecular weights are each obtained by gel permeation chromatography (GPC).

The branched polymer (A) in the invention has preferably a weight-average molecular weight (Mw) of 10000 or more. This molecular weight is measured by gel permeation chromatography (GPC), and is a molecular weight in terms of that of polystyrene. The weight-average molecular weight (Mw) ranges preferably from 10,000 to 1,000,000, more preferably from 15,000 to 500,000. These may be used alone or in combination of two or more thereof as far as the weight-average molecular weight (Mw) ranges thereof is in the above-mentioned range. Also, in the case of using (meth)acrylic polymers (A) having respective weight-average molecular weights (Mw) of 10000 or more, and less than 10000 together, a curable composition and a vibration-damping product are obtained which are excellent in vibration-damping performance against vibrations having frequencies in a low frequency range (several hertz or more) at about room temperature, and which are small in environment-change in the vibration-damping performance. The invention suggests that as the weight-average molecular weight (Mw) of the branched polymer (A) is higher, the vibration-damping performance is better against vibrations having frequencies in a lower frequency range (less than several hertz) in a temperature range of room temperature and higher.

However, if the weight-average molecular weight (Mw) of the branched polymer (A) is merely less than 10000, the resultant cured product is declined in vibration-damping performance. In other words, if the weight-average molecular weight becomes too low, the composition becomes low in viscosity to be easily handled while the resultant cured product tends to be deteriorated in vibration-damping performance against vibrations having frequencies in a low frequency range at about room temperature. By contrast, even if the molecular weight becomes too high, the branched polymer (A) tends to be lower in viscosity than linear polymers having substantially the same weight-average molecular weight (Mw) to be relatively easily handled. It is presumed that the structure of the branched polymer hinders molecules of the branched polymer from intruding into each other so that the molecules are small in interaction, thus making the polymer low in viscosity. In the invention, a precursor of the branched polymer (A), i.e., its constituent-branched-chain itself is not particularly limited in weight-average molecular weight (Mw). When measured by GPC, the molecular weight ranges preferably from 500 to 1,000,000, more preferably from 5000 to 500,000, even more preferably from 10,000 to 100,000 in terms of that of polystyrene. The precursor of the branched polymer (A) is to be a branched chain of the branched polymer (A) to be obtained, so as to affect the vibration-damping performance largely. If the weight-average molecular weight (Mw) of the precursor of the branched polymer (A) is small, the vibration-damping performance is low. If this Mw is large, the vibration-damping property tends to be largely improved. If the Mw is large, the cured product can gain a sufficient vibration-damping property, particularly, in the range of very low frequencies having several tens of hertz or less at room temperature, i.e., about 20°C. By changing the Mw of the precursor of the branched polymer (A), the vibration-damping performance can be controlled at will not only in a high frequency range at low temperatures but also in the range of very low specific frequencies at targeted specific temperatures. Furthermore, if the weight-average molecular weight becomes too low, the composition becomes low in viscosity to be easily handled. By contrast, if the molecular weight becomes too high, the branched polymer (A) tends not to be easily handled when synthesized. As described above, however, the branched polymer (A) tends to be lower in viscosity than linear polymers having substantially the same weight-average molecular weight (Mw) so as to be relatively easily handled.

### <Synthesis Method of Branched Polymer (A)>

In the invention, the synthesis method of the branched polymer (A) is not particularly limited. It is allowable to synthesize the branched polymer (A) on ahead, and add this polymer to others to prepare a composition for damping material. It is also allowable that in a composition containing a precursor of the branched polymer (A), this polymer is afterwards synthesized to prepare a composition for damping material containing the branched polymer (A).

Some examples of the synthesis method of the branched polymer (A) are described. In recent years, various researches have been made about various branched polymers. Trials have been made to obtain a multi-branched polymer, using an acrylic acid derivative and a polyfunctional amine. For example, according to Tomalia et al. (USP 4507466, USP 1558120, and USP 4435548), a branched polymer is obtained from a monoacrylate called a dendrimer and a diamine. In this method, branches of individual generations are synthesized in some divided steps, respectively. Thus, a large number of processes are required so that the method is highly expensive. Accordingly, a problem about costs is also caused. Some reports have been made about an AB2 type of a sequentially-polymerized-type, and a chain-transfer-polymerized-type AB* type (see, for example, JP-T - 2000-515181. It is known that monomers used in each of these cases are hardly commercially available products, or asymmetric monomers are used. These methods are each a synthesis method using a polyfunctional monomer.

In the meantime, a polymer having a specific functional group may be used as a macromonomer. This macromonomer (precursor of a branched polymer) may be used as a starting material to be subjected to a chain reaction, thus yielding a branched polymer. This method is a simpler and easier method. Using, in particular, a macromonomer having a functional group introduced to its polymer terminals at a very high probability, a branched polymer can easily be synthesized. The branched polymer after the macromonomer is polymerized may or may not have a reactive terminal. A method for synthesizing this macromonomer (precursor of the branched polymer) is a method using controlled radical polymerization. The controlled radical polymerization is not limited in type, and is preferably living radical polymerization, more preferably atom transfer radical polymerization. Hereinafter, these will be described.

### (Controlled Radical polymerization)

Radical polymerization can be classified to "ordinary radical polymerization" of using, for example, an azo compound or peroxide as a polymerization initiator merely to copolymerize a monomer having a specific functional group and a (meth)acrylic monomer; and "controlled radical polymerization capable of introducing a specific functional group at a controlled position (of a polymer) such as a terminal thereof.

The "ordinary radical polymerization" is a simple and easy method. However, according to this method, a monomer having a specific functional group is introduced to a polymer only by a probability chance. Thus, when a highly functionalized polymer is desired to be obtained, a considerably large amount of this monomer needs to be used. Conversely, the use of a small amount thereof causes a problem of increasing the proportion of a polymer to which this specific functional group is not introduced. Since the polymerization is free radical polymerization, the polymerization also has a problem of giving only a polymer wide in molecular weight distribution and high in viscosity.

The "controlled radical polymerization" can be classified to "chain transfer agent method", in which a chain transfer agent having a specific functional group is used to conduct polymerization, thus giving a (meth)acrylic polymer having the functional group at its terminal; and "living radical polymerization", in which a polymerization-growing-terminal grows without undergoing any termination reaction or any other reaction, so that a polymer having a molecular weight as substantially designed can be obtained.

Although the "chain transfer agent method" makes it possible to give a polymer having a high functionalization ratio, it is necessary to use a chain transfer agent having a specific functional group in a considerably large amount for an initiator. Thus, economical problems including costs for processes therefor are caused. Equivalently to the "ordinary radical polymerization", this polymerization also has a problem of giving only a polymer wide in molecular weight distribution and high in viscosity since the polymerization is free radical polymerization.

Differently from these polymerization methods, the "living radical polymerization" is high in polymerization rate to cause termination reaction easily by, for example, coupling between radicals. Thus, it is said that the radical polymerization is difficult to control, not causing termination reaction easily. However, the polymerization makes it possible to give a polymer having a narrow molecular weight distribution (Mw/Mn: about 1.1 to 1.5) and further control the molecular weight freely in accordance with the ratio between charged monomer and initiator amounts.

Accordingly, the "living radical polymerization" makes it possible to give a polymer narrow in molecular weight distribution and low in viscosity and further introduce a monomer having a specific functional group at a substantially freely-selected position of the polymer. Thus, the polymerization is preferred as a method for producing the above-mentioned (meth)acrylic polymer having a specific functional group. Furthermore, the (meth)acrylic polymer having a specific functional group may be used as a macromonomer.

Living polymerization denotes, in a narrow sense, a polymerization by which a molecular chain is growing while its terminal continuously has activity. In general, however, living polymerization include, in the category thereof, pseudo-living polymerization, by which molecules are growing while their inactivated terminals and activated terminals are in an equilibrium state. In the invention, the definition thereof corresponds to the latter.

In recent years, "living radical polymerization" has been actively researched by various groups. Examples thereof include polymerization using a cobalt porphyrin complex, as described in Journal of American Chemical Society (J. Am. Chem. Soc.), 1994, vol. 116, p. 7943; polymerization using a radical trapping agent such as a nitroxide compound, as described in Macromolecules, 1994, vol. 27, p. 7228; and "atom transfer radical polymerization (ATRP)" using an organic halide as an initiator, and a transition metal complex as a catalyst.

Among "living radical polymerization" species, "atom transfer radical polymerization" which polymerize (meth)acrylic polymer using an organic halide or halogenated sulfonyl compound as an initiator and a transition metal complex as a catalyst has the above-mentioned characteristics of "living radical polymerization". Additionally, the living polymer concerned has at its terminal, for example, a halogen relatively favorable for functional-group-conversing reaction; thus, the polymerization gives a large flexibility to the design of an initiator and a catalyst. For these reasons, the polymerization is more preferred as a method for producing the specific-functional-group-having (meth)acrylic polymer. Examples of this atom transfer radical polymerization include polymerizations in Matyjaszewski et al., the Journal of American Chemical Society (J. Am. Chem. Soc.), 1995, vol. 117, p. 5614; Macromolecules, 1995, vol. 28, p. 7901; Science, 1996, vol. 272, p. 866; WO96/30421; WO97/18247; WO98/01480; WO98/40415; Sawamoto et al., Macromolecules, 1995, vol. 28, p. 1721; JP-A-9-208616; and JP-A-8-41117. Another example of the atom transfer radical polymerization is the so-called reverse atom transfer racial polymerization. The reverse atom transfer racial polymerization is a method of causing an ordinary radical initiator such as peroxide to act onto a metal atom in a highly oxidized state obtained when an ordinary atom transfer radical polymerization catalyst generates radicals, for example, Cu (II) obtained when Cu (I) is used as a catalyst, so as to produce the same equilibrium state as obtained by atom transfer racial polymerization (see Macromolecules, 1999, 32, 2872). Recently, Percec et al. have suggested a single-electron-transfer (SET) method, which is disclosed in, for example, WO2008/019100. In the SET method, a metal catalyst, an initiator, and other materials similar to those in atom transfer radical polymerization are used. In the present invention, this method is handled as a method included in the category of atom transfer radical polymerization.

In the invention, no especial limitation is imposed to selection as to which method should be used among these living radical polymerizations. Atom transfer radical polymerization is simpler and easier.

Hereinafter, a brief description will be made about atom transfer radical polymerization, which is a preferred method for synthesizing a macromonomer, which is a precursor of the branched polymer in the invention.

In atom transfer radical polymerization, it is preferred to use, as an initiator, e.g., an organic halide, in particular, an organic halide having a carbon-halogen bond high in reactivity (for example, a carbonyl compound having a halogen at the α-position thereof, or a compound having a halogen at a benzyl position thereof), or a halogenated sulfonyl compound.

In order to obtain a (meth)acrylic polymer having, in a single molecule thereof, two or more alkenyl groups capable of undergoing a hydrosilylation reaction, it is preferred to use, as an initiator, an organic halide or halogenated sulfonyl compound having two or more initiation points.

The (meth)acrylic monomer used in the atom transfer radical polymerization is not particularly limited, and all the (meth)acrylic monomers mentioned as the examples are favorably usable.

A transition metal complex used as a catalyst for the polymerization is not particularly limited, and is preferably a metal complex having, as a central metal, an element in Group 7, 8, 9, 10 or 11 in the periodic table, more preferably a transition metal complex having, as a central metal, zerovalent copper, monovalent copper, bivalent ruthenium, bivalent iron, or bivalent nickel, in particular preferably a copper complex. Specific examples of a compound of monovalent copper used to form the copper complex include cuprous chloride, cuprous bromide, cuprous iodide, cuprous cyanide, cuprous oxide, and cuprous perchlorate. When the copper compound is used, the following ligand is added thereto in order to make the catalytic activity high: 2,2'-bipyridyl or a derivative thereof, 1,10-phenanthroline or a derivative thereof, or a polyamine such as tetramethylethylenediamine, pentamethyldiethylenetriamine, hexamethyltriethylenetetramine, or hexamethyltris(2-aminoethyl)amine and others.

The polymerization reaction may be conducted without using any solvent. The reaction may be conducted in a solvent that may be of various types. The solvent types are not particularly limited. Examples thereof include solvents described in paragraph [0067] of JP-A-2005-232419. These may be used alone or in combination of two or more thereof. The polymerization may be conducted in an emulsion system, or in a system containing a supercritical fluid of CO₂ as a solvent.

The polymerization temperature is not limited, and may range from 0 to 200°C, preferably from room temperature to 150°C.

### <Crosslinkable Functional Groups>

### (The Number of Crosslinkable Functional Groups)

The (meth)acrylic polymer synthesized by living radical polymerization may have, at its terminal, a crosslinkable functional group. Differently from the prior art, the crosslinkable functional group is introduced with a high probability. As described above, this is a macromonomer. The average number of the crosslinkable functional groups that the (meth)acrylic polymer has is preferably 0.7 or more per molecule of the polymer. This number is more preferably 0.8 or more, even more preferably 0.9 or more from the viewpoint of reactivity. The use of the living radical polymerization makes it possible to introduce the crosslinkable functional group to one of the terminals with a high proability; thus, by causing this macromonomer to undergo a subsequent reaction, the branched polymer (A) can be obtained and the macromonomer can easily be made to have a high molecular weight with a high probability. The synthesis method of such a branched polymer may be a polymerization method that may be of various types, and is not particularly limited. If necessary, a reaction catalyst or a curing agent may be required. In accordance with the synthesis of the branched polymer (A), various additives may be used together.

Furthermore, a macromonomer having, at its terminals, 1.7 or more crosslinkable functional groups may be used together. From the viewpoint of the curability of the composition and physical properties of the cured product, the average number of the groups per molecule of the macromonomer is preferably from 1.8 to 4.0 both inclusive, more preferably from 1.9 to 3.5 both inclusive. The use of the living radical polymerization makes it possible to introduce the crosslinkable functional groups to both the terminals with a high probability. Thus, the resultant can be used as a good crosslinking agent and/or chain extender.

The average number of the crosslinkable functional groups per molecule of the macromonomer, which is referred to herein, is a calculated value obtained by dividing the concentration of the crosslinkable functional groups per unit weight of the macromonomer, this concentration being obtained from the ¹H-NMR measured value, by the number of the molecules per unit weight thereof, this number being obtained from the molecular weight based on GPC measurement, the copolymerization ratio, and the respective molecular weights of the individual copolymerized monomers.

### (Crosslinkable Functional Group Position)

In the synthesis of the branched polymer in the invention, it is preferred that at least one crosslinkable functional group is present at the molecular chain terminals in order to heighten the polymerization degree of the macromonomer, which affects the damping performance largely. More preferably, the branched polymer has all the crosslinkable functional groups at the molecular chain terminals.

Methods for producing a (meth)acrylic polymer having at least one aforementioned crosslinkable functional group at its molecular chain terminals are disclosed in JP-B-3-14068, JP-B-4-55444, JP-A-6-211922, and others. However, these methods are free radical polymerization methods using the "chain transfer agent method". Accordingly, while the resultant polymer has crosslinkable functional groups at its molecular chain terminals with a relatively high probability, the polymer generally has a large value of 2 or more as the value of the molecular weight distribution represented by Mw/Mn, thus having a problem of being high in viscosity. It is therefore preferred to use the "living radial polymerization" in order to obtain a macromonomer which is a (meth)acrylic polymer narrow in molecular weight distribution and low in viscosity, and has crosslinkable functional groups at its molecular chain terminals with a high probability.

### (Crosslinkable Functional Group Species)

The crosslinkable functional group(s) which the (meth)acrylic polymer has is/are not particularly limited. Examples thereof include a crosslinkable silyl group, an alkenyl group, a hydroxyl group, an amino group, a polymerizable carbon-carbon double bond, and an epoxy group. A curing catalyst or a curing agent may be required therefor. In accordance with a target physical property, various additives may be added thereto.

Hereinafter, these functional groups will be described.

### [Crosslinkable Silyl Group]

The crosslinkable silyl group in the invention may be a group represented by the following general formula (1):

- [Si(R¹)_{2-b}(Y) _{b}O]ₘ-Si(R²)₃₋ₐ(Y)**ₐ** (1)

wherein R¹(s) and R²(s) each represent an alkyl group having 1 to 20 carbon atoms, an aryl group having 6 to 20 carbon atoms, an aralkyl group having 7 to 20 carbon atoms, or a triorganosiloxy group represented by (R')₃SiO- wherein R's are each a monovalent hydrocarbon group having 1 to 20 carbon atoms, and three R's may be the same or different; when two or more R¹s or R²s are present, these groups may be the same or different; Y or each Y represents a hydroxyl or a hydrolysable group; when two or more Ys are present, these groups may be the same or different; a represent 0, 1, 2 or 3; b represent 0, 1 or 2; m is an integer of 0 to 19; and a, m and b satisfy "a + mb ≥ 1".

The hydrolysable group may be a generally used group or radical, examples thereof including a hydrogen atom; and alkoxy, acyloxy, ketoxymate, amino, amide, aminoxy, mercapto, and alkenyloxy groups. Of these examples, preferred are alkoxy, amide and aminoxy groups. Alkoxy groups are particularly preferred since the groups are mildly hydrolyzed to be easily handled. As the number of carbon atoms in alkoxy groups is smaller, the alkoxy groups are higher in reactivity. In the order of methoxy > ethoxy > propoxy > ... ... > ... groups, these groups are lower in reactivity. In accordance with purpose or usage, an appropriate group can be selected.

About one or more hydrolysable groups or hydroxide groups as described above, the number of the group(s) bondable to a single silicon atom is from 1 to 3, and (a + ∑b) ranges preferably from 1 to 5. When two or more hydrolysable groups or hydroxyl groups are bonded into the crosslinkable silyl group, these may be the same or different. One or more silicon atoms form the crosslinkable silyl group. In the case of silicon atoms linked to each other through, for example, one or more siloxane bonds, the number of the silicon atoms is preferably 20 or less. Particularly preferred is a crosslinkable silyl group represented by the following general formula (2):

-Si (R²)₃₋ₐ (Y)ₐ (2)

wherein R²(s) and Y(s) are the same as described above; and a is an integer of 1 to 3 since a compound having this group is easily available.

The number "a" is not particularly limited, and is preferably 2 or more since the curability, and physical properties of the cured product are good.

In many cases, as the (meth)acrylic polymer (A) having such a crosslinkable silyl group, a polymer is used which has a hydrolysable silicon group in which two hydrolysable groups are bonded to a silicon atom or each silicon atom. However, in the case of using the polymer at low temperature, or in other cases, particularly, in the case of requiring the polymer to have a very large curing rate, the curing rate thereof is insufficient. In a case where the polymer is desired to exhibit flexibility after cured, the polymer needs to be lowered in crosslinkage density. Thus, the cured polymer may have stickiness (surface tackiness) since the crosslinkage density is insufficient. At this time, the polymer (A) wherein the number "a" is 3 (for example, a trimethoxy functional group) is preferred.

Although the polymer (A) wherein the number "a" is 3 (for example, a trimethoxy functional group) is larger in curing speed than the polymer (A) wherein the number "a" is 2 (for example, a dimethoxy functional group), the polymer (A) wherein the number "a" is 2 may be better in storage stability and mechanical properties (such as elongation). In order to balance the curability and physical properties with each other, the polymer (A) wherein the number "a" is 2 (for example, a dimethoxy functional group) and the polymer (A) wherein the number "a" is 3 (for example, a trimethoxy functional group) may be used together.

When Ys are, for example, the same, the reactivity of Ys is higher as the number "a" is larger. Thus, the selection of Ys and the number "a" into various combinations makes it possible to control the curability, and mechanical properties and others of the cured product. In accordance with purpose or usage, Ys and the number "a" may be selected. The polymer (A) wherein the number "a" is 1 may be used, as a chain extender, in the form of being mixed with at least one polymer having a crosslinkable silyl group, specifically, at least one polymer selected from polysiloxane type, polyoxypropylene type, and polyisobutylene type polymers. The mixture can be made into a composition which has a low viscosity before cured, a high fracture elongation after cured, a low bleeding-property, and a high surface-contamination-resistance.

### [Alkenyl Group]

The alkenyl group in the invention is not limited, and is preferably a group represented by the following general formula (3):

H₂C=C(R¹¹)- (3)

wherein R¹¹ is a hydrogen atom or a hydrocarbon group having 1 to 20 carbon atoms.

In the general formula (3), R¹¹ is a hydrogen atom or a hydrocarbon group having 1 to 20 carbon atoms. Specific examples thereof include the following groups:

-(CH₂)ₙ-CH₃,

-CH(CH₃)-(CH₂)ₙ-CH₃,

-CH(CH₂CH₃)-(CH₂)ₙ-CH₃,

-CH(CH₂CH₃)₂,

-C(CH₃)₂-(CH₂)ₙ-CH₃,

-C(CH₃)(CH₂CH₃)-(CH₂)ₙ-CH₃,

-C₆H₅,

-C₆H₅(CH₃),

-C₆H₅(CH₃)₂,

- (CH₂)ₙ-C₆H₅,

- (CH₂)n-C₆H₅(CH₃),

and

-(CH₂)ₙ-C₆H₅(CH₃)₂.

wherein each n is an integer of 0 or more, and each of these groups has 20 or less carbon atoms in total.

Of these examples, a hydrogen atom is preferred.

It is preferred that the alkenyl group of the (meth)acrylic polymer (A) and/or (meth)acrylic polymer (B) is not activated by any one of the carbonyl group, an alkenyl group and an aromatic ring which are each conjugated with the carbon-carbon double bond of the former alkenyl group although the invention is not limited to this manner.

The form of bonding between the alkenyl group and the polymer main chain is not particularly limited. Preferably, the bonding is attained through, for example, a carbon-carbon bond, an ether bond, an ester bond, a carbonate bond, an amide bond, or a urethane bond.

### [Amino Group]

The amino group in the invention is not limited, and may be a group -NR¹²₂ wherein R¹² s are each hydrogen or a monovalent organic group having 1 to 20 carbon atoms; and two R¹²s may be the same or different, or two R¹²s at different ends of a compound-moiety may be linked to each other to form a cyclic structure.

Even when the amino group is an ammonium salt represented by - (NR¹²₃)⁺X⁻ wherein R¹²s are the same as described above and X⁻ is a counter anion, no problem is caused.

In this formula, R¹²s are each hydrogen or a monovalent organic group having 1 to 20 carbon atoms. Examples thereof include hydrogen, alkyl groups having 1 to 20 carbon atoms, aryl groups having 6 to 20 carbon atoms, and aralkyl groups having 7 to 20 carbon atoms. Two R¹²s may be the same or different, or two R¹²s at different ends of a compound-moiety may be linked to each other to form a cyclic structure.

### [Group Having Polymerizable Carbon-Carbon Double Bond]

The group having a polymerizable carbon-carbon double bond is preferably a group represented by the following general formula (4):

-OC(O)C(R¹³)=CH₂ (4)

wherein R¹³ is hydrogen, or a monovalent organic group having 1 to 20 carbon atoms.

R¹³ is more preferably hydrogen, or a methyl group.

In the general formula (4), specific examples of R¹³, which is not particularly limited, include -H, CH₃, -CH₂CH₃,-(CH₂)ₙCH₃ wherein n represents an integer of 2 to 19, -C₆H₅,-CH₂OH, and -CN. Preferably, R¹³ is -H or -CH₃.

### [Epoxy Group]

Preferred examples of the epoxy group include glycidyl, glycidyl ether, 3,4-epoxycyclohexyl, and oxetane groups. Glycidyl, glycidyl ether, and 3,4-epoxycyclohexyl groups are more preferred from the viewpoint of reactivity.

As described above, the branched polymer (A) is obtained by causing a macromonomer having a single terminal to which a crosslinkable functional group is, with a high probability, introduced to undergo a subsequent reaction by making good use of controlled radical polymerization. Thus, with a high probability, the macromonomer can easily be made to have a high molecular weight. The polymerization method for this subsequent reaction may be any method. The branched polymer (A) may be obtained by uncontrolled polymerization, or by conducting the subsequent reaction, using controlled radical polymerization. In the synthesis of the branched polymer (A) in the invention, a reaction catalyst or a curing agent may be required. In accordance with a target physical property, various additives may be added thereto.

### <Reaction Catalyst/Multi-branching Agent>

### [Case where (Meth)acrylic Polymer Having Crosslinkable Silyl Group]

The (meth)acrylic polymer having a crosslinkable silyl group is condensed and made into a multi-branched form by forming siloxane bonds in the presence or absence of a conventionally known condensing catalyst that may be of various types. As a result, the branched polymer (A) is obtained. The branched polymer may be produced into various characters or forms including gel, rubber and resin characters or forms in accordance with the molecular weight and the main chain skeleton of the (meth)acrylic polymer.

Examples of the condensing catalyst include tetravalent tin compounds, such as dibutyltin dilaurate, dibutyltin diacetate, dibutyltin diethylhexanoate, dibutyltin dioctate, dibutyltin dimethylmaleate, dibutyltin diethylmaleate, dibutyltin dibutylmaleate, dibutyltin diisooctylmaleate, dibutyltin ditridecylmaleate, dibutyltin dibenzylmaleate, dibutyltin maleate, dioctyltin diacetate, dioctyltin distearate, dioctyltin dilaurate, dioctyltin diethylmaleate, and dioctyltin diisooctylmaleate; divalent tin compounds such as tin octylate, tin naphthenate, and tin stearate; monoalkyl tins, such as monobutyltin compounds such as monobutyltin trisoctoate and monobutyltin triisopropoxide, and monooctyltin compounds; titanates, such as tetrabutyl titanate and tetrapropyl titanate; organic aluminum compound, such as aluminum trisacetylacetonate, aluminum trisethylacetoacetate, diisopropoxyaluminum ethylacetoacetate; metal salts of carboxylic acids (such as 2-ethylhexanoic acid, neodecanoic acid, versatic acid, oleic acid, and naphthenic acid), such as bismuth carboxylate, iron carboxylate, titanium carboxylate, lead carboxylate, vanadium carboxylate, zirconium carboxylate, calcium carboxylate, potassium carboxylate, barium carboxylate, manganese carboxylate, cerium carboxylate, nickel carboxylate, cobalt carboxylate, zinc carboxylate, and aluminum carboxylate, or any reaction product or mixture made from/of one or more of these salts and any amine compound that will be described later, such as laurylamine; chelate compounds, such as zirconiumtetraacetyl acetonate, and titaniumtetraacetyl acetonate; aliphatic primary amines, such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines, such as dimethylamine, diethylamine, dipropylamine, diisopropylamine, dibutylamine, diamylamine, dioctylamine, di(2-ethylhexyl)amine, didecylamine, dilaurylamine, dicetylamine, distearylamine, methylstearylamine, ethylstearylamine, and butylstearylamine; aliphatic tertiary amines, such as triamylamine, trihexylamine, and trioctylamine; aliphatic unsaturated amines, such as triallylamine, and oleylamine; aromatic amines, such as laurylaniline, stearylaniline, and triphenylamine; and other amines, such as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, and 1,8-diazabicyclo(5,4,0)undecene-7 (DBU), or carboxylic acid salts of these amine compounds; any reaction product or mixture made from/of an amine compound and an organic tin compound, such as a reaction product or mixture made from/of laurylamine and tin octylate; any low-molecular-weight polyamide resin made from an excessive amount of polyamine and a polybasic acid; any reaction product made from an excessive amount of polyamine and an epoxy compound; and γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysialne, N-(β-aminoethyl)aminopropyltrimethoxysilane, N-(β-aminoethyl)aminopropylmethyldimethoxysilane, N-(β-aminoethyl)aminopropyltriethoxysilane, N-(β-aminoethyl)aminopropylmethyldiethoxysilane, N-(βaminoethyl)aminopropyltriisopropoxysilane, γ-ureiodpropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane. Other examples thereof include silanol condensing catalysts, for example, derivatives obtained by modifying these amines, such as amino-modified silyl polymers, silylated amino polymers, unsaturated aminosilane complexes, phenylamino long-chain-alkylsilanes, amino-silylated silicones, and other silane coupling agents each having an amino group; and other known silanol condensing catalysts, such as acidic catalysts, and basic catalysts.

These catalysts may be used alone, or in combination of two or more thereof. The blend amount of the condensing catalyst(s) is preferably from about 0.1 to 20 parts by weight, more preferably from 1 to 10 parts by weight for 100 parts by weight of the crosslinkable-silyl-group-having (meth)acrylic polymer. If the blend amount of the silanol condensing catalyst(s) is below this range, the reaction rate may become slow and the reaction may not sufficiently advance with ease. It is preferred to use a tin-containing curing catalyst in order to control the reactivity although the invention is not particularly limited to this manner.

In order to raise the activity of the condensing catalyst further in the curable composition of the invention for damping material, the above-mentioned amino-group-having silane coupling agents may each be used as a cocatalyst, as well as an amine compound. The amino-group-having silane coupling agent is a compound having a group containing a silicon atom to which one or more hydrolysable groups are bonded (hereinafter the group will be referred to as the hydrolysable silicon group), and an amino group. Examples of this hydrolysable group may be the exemplary groups that have been already described. From the viewpoint of hydrolysis rate, for example, methoxy and ethoxy groups are preferred. The number of the hydrolysable group(s) is preferably 2 or more, in particular preferably 3 or more.

The blend amount of these amine compounds is preferably from 0.01 to 50 parts by weight, more preferably from 0.1 to 20 parts by weight for 100 parts by weight of the crosslinkable-silyl-group-having (meth)acrylic polymer. If the blend amount of the amine compounds is less than 0.01 parts by weight, the reaction rate may become slow and the reaction may not sufficiently advance with ease. If the blend amount of the amine compounds is more than 50 parts by weight, the color tone is deteriorated, and unfavorable results are caused against environment, for example, a strong odor is generated.

These amine compounds may be used alone or in the form of a mixture of two or more thereof.

Furthermore, the addition of the following as a cocatalyst may be permissible:
a silicon compound having neither any amino group nor silanol group and represented by the following general formula (5) :

   R⁴⁹ₐSi (OR⁵⁰)₄₋ₐ (5)

   wherein R⁴⁹, and R⁵⁰(s) are each independently a substituted or unsubstituted hydrocarbon group having 1 to 20 carbon atoms; and a is any one of 0, 1, 2 and 3.

This silicon compound is preferably a compound represented by the general formula (5) wherein R⁴⁹ is an aryl group having 6 to 20 carbon atoms, such as phenyltrimethoxysilane, phenylmethyldimethoxysilane, phenyldimethylmethoxysilane, diphenyldimethoxysilane, diphenyldiethoxysilane, or triphenylmethoxysilane because of its large effect of accelerating the curing reaction of the composition although the compound is not limited. In particular, diphenyldimethoxysilane or diphenyldiethoxysilane is most preferred since the compound is low-cost and easily available.

The blend amount of this silicon compound is preferably from about 0.01 to 20 parts by weight, more preferably from 0.1 to 10 parts by weight for 100 parts by weight of the crosslinkable-silyl-group-having (meth)acrylic polymer. If the blend amount of the silicon compound is below this range, the effect of accelerating the reaction may become small.

### [Case of (Meth)acrylic Polymer having Alkenyl Group]

When an alkenyl group is used to crosslink the (meth)acrylic polymer, it is preferred to make the polymer into a multi-branched form by hydrosilylation reaction using a hydrosilyl-group-containing compound as a branching compound, and a hydrosilylation catalyst although the invention is not limited to this manner.

The hydrosilyl-group-containing compound is not particularly limited as far as the compound makes it possible to be combined with the alkenyl-group-having (meth)acrylic polymer to make this polymer into a multi-branch form. This compound may be of various types. Examples thereof include linear polysiloxanes each represented by the following general formula (6) or (7):

R⁵¹₃SiO- [Si(R⁵¹)₂O] ₐ- [Si(H) (R⁵²)O] _{b}- [Si (R⁵²)(R⁵³)O]_{c}-SiR⁵¹₃ (6),

or

HR⁵¹₂SiO-[Si(R⁵¹)₂O]ₐ- [Si (H)(R⁵²)O]_{b}⁻[Si (R⁵²)(R⁵³)O]_{c}-SiR⁵¹₂H (7)

wherein R⁵¹s and R⁵²s each represent an alkyl group having 1 to 6 carbon atoms, or a phenyl group; R⁵³(s) (each) represent(s) an alkyl group having 1 to 10 carbon atoms, or an aralkyl group; and a, b and c are integers satisfying the following, respectively: 0 ≤ a ≤ 100, 2 ≤ b ≤ 100, and 0 ≤ c ≤ 100; and include cyclic siloxane compounds.

These examples may be used alone or in the form of a mixture of two or more thereof. Of these siloxanes, any linear siloxane represented by the following general formula (8) or (9) having phenyl group, or any cyclic siloxane is preferred from the viewpoint of the compatibility thereof with the (meth)acrylic polymer (A) and the (meth)acrylic polymer (B):

(CH₃)₃SiO- [Si (H) (CH₃)O]g- [Si (C₆H₅) ₂O]ₕ-Si (CH₃)₃ (8),

or

(CH₃)₃SiO- [Si (H) (CH₃) O] g⁻

[Si (CH₃) {CH₂C(H) (R⁵⁷)C₆H₅}O]ₕ-Si(CH₃)₃ (9)

wherein R⁵⁷(s) (each) represent(s) hydrogen or a methyl group; g and h are integers satisfying the following, respectively: 2 ≤ g ≤ 100, and 0 ≤ h ≤ 100; and C₆H₅ represents a phenyl group.

The hydrosilyl-group-containing compound may be a compound obtained by causing a hydrosilyl-group-containing compound represented by any one of the general formulae (6) to (9) to undergo addition-reaction with a low-molecular-weight compound having in the molecule thereof two or more alkenyl groups in such a manner that its hydrosilyl groups will partially remain after the reaction. The compound having in the molecule thereof two or more alkenyl groups may be of various types. Examples thereof include hydrocarbon compounds, such as 1,4-pentadiene, 1,5-hexadiene, 1,6-heptadiene, 1,7-octadiene, 1,8-nonadiene, and 1,9-decadiene; ether compounds, such as O,O'-diallylbisphenol A, and 3,3'-diallylbisphenol A; ester compounds, such as diallyl phthalate, diallyl isophthalate, triallyl trimellitate, and tetraallyl pyromellitate; and carbonate compounds, such as diethylene glycol diallyl carbonate.

The compound resulting from the addition reaction can be obtained by dropping the above-mentioned alkenyl-group-containing compound slowly into an excessive amount of the hydrosilyl-group-containing compound represented by any one of the general formulae (6) to (9) in the presence of a hydrosilylation catalyst. The alkenyl-group-containing (meth)acrylic polymer and the branching agent may be mixed with each other at an arbitrary proportion.

The reaction between the alkenyl-group-containing (meth)acrylic polymer and the branching agent is advanced by mixing these components with each other and heating the mixture. In order to advance the reaction more rapidly, a hydrosilylation catalyst may be added thereto. This hydrosilylation catalyst is not particularly limited, and examples thereof include a radical initiator such as an organic peroxide or an azo compound, and a transition metal catalyst.

The radical initiator is not particularly limited, and examples thereof include dialkyl peroxides, such as di-t-butyl peroxide, 2,5-dimethyl-2,5-di(t-butylperoxy)hexane, 2,5-dimethyl-2,5-di(t-butylperoxy)-3-hexyne, dicumyl peroxide, t-butylcumyl peroxide, and α,α'-bis(t-butylperoxy)isopropylbenzene; diacyl peroxides, such as benzoyl peroxide, p-chlorobenzoyl peroxide, m-chlorobenzoyl peroxide, 2,4-dichlorobenzoyl peroxide, and lauroyl peroxide; peroxy acid esters, such as t-butyl peroxybenzoate; peroxy dicarbonates, such as diisopropyl diperoxycarbonate, and di-2-ethylhexyl diperoxycarbonate; and peroxy ketals, such as 1,1-di(t-butylperoxy)cyclohexane, and 1,1-di(t-butylperoxy)-3,3,5-trimethylcyclohexane.

The transition metal catalyst is not particularly limited. Examples thereof include simple platinum; a catalyst in which solid platinum is dispersed in a carrier such as alumina, silica or carbon black; platinate chloride; a complex of platinate chloride and, for example, an alcohol, aldehyde or ketone; a platinum-olefin complex; and a platinum (0)-divinyltetramethyldisiloxane complex. Examples of the catalyst other than the platinum compounds include RhCl(PPh₃)₃, RhCl₃, RuCl₃, IrCl₃, FeCl₃, AlCl₃, PdCl₂·H₂O, NiCl₂, and TiCl₄. These catalysts may be used alone or in combination of two or more thereof. The amount of the catalyst(s) is not particularly limited. It is advisable to use the catalyst(s) in an amount of 10⁻¹ to 10⁻⁸ moles, preferably 10⁻³ to 10⁻⁶ moles per mole of the alkenyl group(s) of the precursor of the branched polymer (A). If the amount is less than 10⁻⁸ moles, the cure is not sufficiently advanced. It is preferred not to use the hydrosilylation catalyst in an amount of 10⁻¹ moles or more since the catalyst is expensive.

In order to give a balance between storage stability and reactivity to the composition, a reaction adjustor may be blended thereinto. A blendable reaction adjustor may be a compound containing an aliphatic unsaturated bond. An example thereof is any acetylene alcohol. Examples of an acetylene alcohol giving a good balance between the storage stability and the curability include 2-phenyl-3-butyne-2-ol, 1-ethynyl-1-cyclohexanol, 3,5-dimethyl-1-hexyne-3-ol, 3-methyl-1-hexyne-3-ol, 3-ethyl-1-pentyne-3-ol, 2-methyl-3-butyne-2-ol, and 3-methyl-1-pentyne-3-ol.

Examples of the above-mentioned aliphatic-unsaturated-bond-containing compound other than acetylene alcohols, for improving the storage stability at high temperature, include ene-yne compounds, silane compounds, polysiloxane compounds, olefin compounds, aliphatic carboxylic acid esters of any olefin alcohol, such as vinyl acetate, cyclic tetravinylsiloxanes, nitriles containing an aliphatic unsaturated bond, such as 2-pentenenitrile, alkylacetylene dicarboxylates, maleic acid esters, and diorganofumarates.

These reaction adjustors may be used alone or in combination of two or more thereof.

The reaction temperature is not particularly limited, and is generally from 0 to 200°C, more preferably from 30 to 150°C, even more preferably from 80 to 150°C.

### [Case of (Meth)acrylic Polymer Having Hydroxyl Group]

In the case of using the methacrylic polymer having a hydroxyl group in the invention, the polymer is evenly cured by using, as a branching agent, a compound having two or more functional groups each reactive with a hydroxyl group. Specific examples of the branching agent include polyisocyanate compounds each having, in the molecule thereof, two or more isocyanate groups; aminoplast resins, such as methylolated melamine, and alkyl-etherized products thereof or low-degree-condensed products thereof; and polyfunctional carboxylic acids, and halides thereof. When these branching agents are each used to prepare a branched polymer, an appropriate reaction catalyst may be used.

### [Case of (Meth)acrylic Polymer Having Amino Group]

The (meth)acrylic polymer having an amino group, which is related to the invention, reacts uniformly, using a compound having two or more functional groups each reactive with an amino group as a branching agent. Specific examples of the branching agent include polyisocyanate compounds each having, in the molecule thereof, two or more isocyanate groups; aminoplast resins, such as methylolated melamine, and alkyl-etherized products thereof or low-degree-condensed products thereof; and polyfunctional carboxylic acids, and halides thereof. When these branching agents are each used to prepare a branched polymer, an appropriate reaction catalyst may be used.

### [Case of (Meth)acrylic Polymer Having Epoxy Group]

A branching agent for the (meth)acrylic polymer having an epoxy group, which is related to the invention, is not particularly limited. Examples thereof include light/ultraviolet-ray curing agents, such as aliphatic, alicyclic, and aromatic amines; acid anhydrides; polyamides; imidazoles; amineimides; urea; melamine and derivatives thereof; polyamine salts; phenolic resins; polymercaptane, and polysulfide; aromatic diazonium salts, diallyliodonium salts, triallylsulfonium salts, triallylselenium salts, and other.

### [Case of (Meth)acrylic Polymer Having Polymerizable Carbon-Carbon Double Bond]

The (meth)acrylic polymer having a polymerizable carbon-carbon double bond can be crosslinked by the polymerization reaction of the polymerizable carbon-carbon double bond.

A method for the crosslinking may be a curing method using an active energy ray, or a curing method using heat. In the active energy ray curing type method, a radical photoinitiator or an anion photoinitiator is preferably used as a photopolymerization initiator. In the heat curing type method, it is preferred to use, as a thermopolymerization initiator, an initiator selected from the group consisting of azo initiators, peroxides, persulfates, and redox initiators. The usable initiators may be used alone or in the form of a mixture of two or more thereof. When the initiators are used in the mixture form, the use amount of the initiator(s) of each of the various types is preferably within a range of the type that will be described later.

When the (meth)acrylic polymer having a polymerizable carbon-carbon double bond is crosslinked, it is allowable to use, in accordance with a purpose thereof, a polymerizable monomer and/or oligomer, or various additives. The polymerizable monomer and/or oligomer is/are preferably a monomer and/or oligomer having a radical polymerizable group, or a monomer and/or oligomer having an anion polymerizable group. Examples of the radical polymerizable group include acrylic functional groups such as a (meth)acrylic group; and styrene, acrylonitrile, vinyl ester, N-vinylpyrrolidone, acrylamide, conjugated diene, vinyl ketone, and vinyl chloride groups. Of these groups, groups each having a (meth)acrylic group are preferred. Examples of the anion polymerizable group include (meth)acrylic, styrene, acrylonitrile, N-vinylpyrrolidone, acrylamide, conjugated diene, and vinyl ketone groups. Of these groups, groups each having an acrylic functional group are preferred.

Specific examples of the above-mentioned monomer include (meth)acrylate monomers, cyclic acrylates, N-vinylpyrrolidone, styrene monomers, acrylonitrile, N-vinylpyrrolidone, acrylamide monomers, conjugated diene monomers, and vinyl ketone monomers. Examples of the (meth)acrylate monomers include n-butyl (meth)acrylate, 2-ethylhexyl (meth)acrylate, isooctyl (meth)acrylate, and isononyl (meth)acrylate.

Examples of the styrene monomers include styrene, and α-methylstyrene. Examples of the acrylamide monomers include acrylamide, and N,N-dimethylacrylamide. Examples of the conjugated diene monomers include butadiene, and isoprene. Examples of the vinyl ketone monomers include methyl vinyl ketone.

Examples of the polymerizable monomer that is a polyfunctional monomer include neopentyl glycol polypropoxy diacrylate, trimethylolpropane polyethoxy triacrylate, bisphenol F polyethoxy diacrylate, bisphenol A polyethoxy diacrylate, dipentaerythritol polyhexanolide hexaacrylate, tris(hydroxyethyl) isocyanurate polyhexanolide triacrylate, tricyclodecane dimethylol diacrylate 2-(2-acryloyloxy-1,1-dimethyl)-5-ethyl-5-acryloyloxymethyl-1,3-dioxane, tetrbromobisphenol A dimethoxy diacrylate, 4,4-dimercaptodiphenylsulfide dimethacrylate, polytetraethylene glycol diacrylate, 1,9-nonanediol diacrylate, and ditrimethylol propane tetraacrylate.

Examples of the oligomer include epoxy acrylate resins, such as bisphenol A type epoxy acrylate resin, phenol novolak type epoxy acrylate resin, and cresol novolak type epoxy acrylate resin; COOH-group-modified epoxy acrylate resin, urethane acrylate resins each obtained by causing a hydroxyl-group-containing (meth)acrylate {such as hydroxyethyl (meth)acrylate, hydroxypropyl (meth)acrylate, hydroxybutyl (meth)acrylate or pentaerythritol triacrylate} to react with a urethane resin obtained from a polyol(such as polytetramethylene glycol, polyester diol made from ethylene glycol and adipic acid, ε-caprolactone-modified polyester diol, polypropylene glycol, polyethylene glycol, polycarbonate diol, hydroxyl-group-terminated hydrogenated polyisoprene, hydroxyl-group-terminated polybutadiene, or hydroxyl-group-terminated polyisobutylene) and an organic isocyanate (such as tolylene diisocyanate, isophorone diisocyanate, diphenylmethane diisocyanate, hexamethylene diisocyanate or xylylene diisocyanate); resins each obtained by introducing a (meth)acrylic group through an ester bond into the above-mentioned polyol; and polyester acrylate resins.

A selection is made from these monomers and oligomers in accordance with an initiator and reaction conditions used.

The number-average molecular weight of the acrylic-functional-group-having monomer and/or oligomer is not particularly limited.

### Crosslinked System Based on Active Energy Ray

The branched polymer (A) in the curable composition of the invention for damping material may also be synthesized, using an active energy ray such as UV or an electron beam. Examples of the active energy ray include ultraviolet rays, visible rays, LED light rays, an electron beam, and a radial ray. Of these examples, ultraviolet rays are preferred from the viewpoint of the versatility or a high handleability of an apparatus for outputting the energy, and physical properties of the resultant cured product. When the polymer is made into a multi-branched form by the active energy ray, it is preferred to incorporate a photopolymerization initiator thereinto.

The photopolymerization initiator used in the invention is not particularly limited. A radical photoinitiator and an anion photoinitiator are preferred, and the former is particularly preferred. Examples thereof include acetophenone, propiophenone, benzophenone, xanthol, fluorein, benzaldehyde, anthraquinone, triphenylamine, carbazole, 3-methylacetophenone, 4-methylacetophenone, 3-pentylacetophenone, 2,2-diethoxyacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoyl, benzoin methyl ether, benzoin butyl ether, bis(4-dimethylaminophenyl) ketone, benzyl methoxy ketal, 2-chlorothioxanthone, 2,2-dimethoxy-1,2-diphenylethane-1-one, 1-hydroxy-cyclohexyl-phenyl-ketone, 2-hydroxy-2-methyl-1-phenyl-propane-1-one, 2-methyl-1-[4-(methylthio)phenyl]-2-morpholinopropane-1-one, 2-benzyl-2-dimethylamino-l-(4-morpholinophenyl)-butanone-1, bis(2,4,6-trimethylbenzoyl)-phenylphosphine oxide, bis(2,6-dimethoxybenzoyl)-2,4,4-trimethylpentylphosphine oxide, and 2,4,6-trimethylbenzoyl-diphenyl-phosphine oxide. Of these examples, preferred are compounds having a hydroxyl group and a phenyl ketone structure, compounds having a benzophenone structure, and compounds having an acylphosphine oxide structure. Specifically, preferred are 3-methoxybenzophenone, 4-methylbenzophenone, 4-chlorobenzophenone, 4,4'-dimethoxybenzophenone, 4-chloro-4'-benzylbenzophenone, 1-hydroxy-cyclohexyl-phenyl-ketone, 2-hydroxy-2-methyl-1-phenyl-propane-1-one, 2-benzyl-2-dimethylamino-l-(4-morpholinophenyl)-butanone-1, bis(2,4,6-trimethylbenzoyl)-phenylphosphine oxide, bis(2,6-dimethoxybenzoyl)-2,4,4-trimethylpentylphosphine oxide, and 2,4,6-trimethylbenzoyl-diphenyl-phosphine oxide. Particularly preferred are 2,2-dimethoxy-1,2-diphenylethane-1-one, 1-hydroxy-cyclohexyl-phenyl-ketone, 2-hydroxy-2-methyl-1-phenyl-propane-1-one, bis(2,6-dimethoxybenzoyl)-2,4,4-trimethylpentylphosphine oxide, and 2,4,6-trimethylbenzoyl-diphenyl-phosphine oxide. These initiators may be used alone, or in combination with another compound. Specific examples of the combination include a combination with an amine such as diethanolmethylamine, dimethylethanolamine, or triethanolamine; a combination of this combination further combined with a iodonium salt such as diphenyliodonium chloride; and a combination with an amine and a colorant such as methylene blue.

When the photopolymerization initiator is used, a polymerization inhibitor may be added thereto if necessary, examples thereof including hydroquinone, hydroquinone monomethyl ether, benzoquinone, and p-tert-butylcatechol.

The polymerization initiator which is a near-infrared-ray polymerization initiator may be, for example, a near-infrared-ray-absorbing cationic dye. The near-infrared-ray-absorbing cationic dye is preferably, for example, a near-infrared-ray-absorbing-cationic-dye/borate-anion complex disclosed in, for example, JP-A-3-111402 and JP-A-5-194619, which is excited by light energy within the range of 650 to 1500 nm. More preferably, a boron-containing sensitizer is used together.

The addition amount of the photopolymerization initiator is not particularly limited since the amount needs only to cause the system to be slightly photo-functionalized. The amount is preferably from 0.001 to 10 parts by weight for 100 parts by weight of the (meth)acrylic polymer having a polymerizable carbon-carbon double bond.

The method for synthesizing the branched polymer (A) in the invention is not particularly limited. Examples thereof include respective radiations of light and an electron beam, using a high-pressure mercury lamp, a low-pressure mercury lamp, an electron-beam-radiating apparatus, a halogen lamp, a light emission diode, a semiconductor laser, or some other in accordance with the nature of the photopolymerization initiator.

### Heating Crosslinked System

When the branched polymer (A) in the invention is synthesized by heating, it is preferred to incorporate a thermopolymerization initiator thereinto.

The thermopolymerization initiator used in the invention is not particularly limited. Examples thereof include an azo initiator, a peroxide initiator, a persulfate initiator, and a redox initiator.

Appropriate examples of the azo initiator include 2,2'-azobis(4-methoxy-2,4-dimethylvaleronitrile) (VAZO 33), 2,2'-azobis(2-amidinopropane)bihydrochloride (VAZO 50), 2,2'-azobis(2,4-dimethylvaleronitrile) (VAZO 52), 2,2'-azobis(isobutyronitrile) (VAZO 64), 2,2'-azobis-2-methylbutyronitrile (VAZO 67), and 1,1-azobis(1-cyclohexanecarbonitrile) (VAZO 88) (each available from DuPont Chemical), 2,2'-azobis(2-cyclopropylpropionitrile), and 2,2'-azobis(methyl isobutyrate) (V-601) (available from Wako Pure Chemical Industries, Ltd.) although the appropriate examples are not limited thereto.

Appropriate examples of the peroxide initiator include benzoyl peroxide, acetyl peroxide, lauroyl peroxide, decanoyl peroxide, dicetyl peroxydicarbonate, di(4-t-butylcyclohexyl) peroxydicarbonate (Perkadox 16S, available from Akzo Nobel), di(2-ethylhexyl) peroxydicarbonate, t-butyl peroxypivalate (Lupersol 11) (available from Elf Atochem), t-butyl peroxy-2-ethylhexanoate (Trigonox 21-C50) (available from Akzo Nobel), and dicumyl peroxide although the appropriate examples are not limited thereto.

Appropriate examples of the persulfate initiator include potassium persulfate, sodium persulfate, and ammonium persulfate although the appropriate examples are not limited thereto.

Appropriate examples of the redox (oxidation-reduction) initiator include any combination of the persulfate initiator with a reducing agent (such as sodium hydrogenmetasulfite, or sodium hydrogensulfite); any system based on an organic peroxide with a tertiary amine, for example, a system based on benzoyl peroxide with dimethylaniline; and any system based on an organic hydroperoxide with a transition metal, for example, a system based on cumene hydroperoxide with cobalt naphthate although the appropriate examples are not limited thereto.

Examples of a different initiator include pinacols such as tetraphenyl 1,1,2,2-ethanediol although the initiator is not limited thereto.

The thermopolymerization initiator that is a thermal radical initiator is preferably selected from the group consisting of azo initiators and peroxide initiators. The initiator is more preferably 2,2'-azobis(methyl isobutyrate), t-butyl peroxypivalate, di(4-t-butylcyclohexyl) peroxydicarbonate, or mixtures of these compounds.

The thermopolymerization initiator used in the invention is present in a catalytically effective amount. Such an amount is not particularly limited. Typically, the amount is from about 0.01 to 5 parts by weight, more preferably from about 0.025 to 2 parts by weight for 100 parts by weight of the total of the (meth)acrylic polymer in the invention which has, at at least one terminal thereof, a group having a polymerizable carbon-carbon double bond, and a mixture of any other added monomer and oligomer. When an initiator mixture is used, the total amount of the mixed initiators is an amount supposed in the case of regarding the mixed initiators to be used as a single initiator.

The method for synthesizing the branched polymer in the invention is not particularly limited. The temperature therefor is varied in accordance with species of the used thermal initiator and (meth)acrylic polymer, and the added compounds and other substances. Usually, the temperature ranges preferably from 50 to 250°C, more preferably from 70 to 200°C. The curing period is varied in accordance with the used polymerization initiator, monomer and solvent, and the reaction temperature. Usually, the period ranges from 1 minute to 10 hours.

### «Resin (B) »

The damping material of the invention contains a resin (B).

The resin (B) may be in any one of resin, rubber and gel states, and the resin (B) is a chemically crosslinked body and/or a physically crosslinked body.

The resin, rubber and gel states defined in the invention each denote such a state that the resin (B) can keep a shape thereof at room temperature for 24 hours in an environment in which the resin (B) receives gravity. The damping material may be any substance having any shape as far as the substance is such a shape-keepable material.

A component which keeps the resin state may be, for example, a thermoplastic resin, a lyotropic liquid crystal resin, a liquid resin, a thermosetting resin, or a crosslinked rubber as far as performances of the damping material of the invention are not damaged.

Examples of the thermoplastic resin include polyolefin resins, aromatic vinyl compound based resins, polyvinyl chloride based resins, polyacrylic resins, polyether resins, polyamide resins, polyester resins, polycarbonate resins, polyacetal resins, polyphenylene ether resins, polymethylpentene, ultrahigh molecular weight polyethylene, polysulfone resins, polysulfide resins, polyimide resins, polyamideimide resins, polyetherimide resins, fluororesins, thermoplastic polyurethane resins, polyethersulfone resins, polyetherketone resins, thermotropic liquid crystal resins, and lyotropic liquid crystal resins.

Examples of the liquid resin include silicone resins, modified silicone (MS) resins, polyisobutylene (PIB) resins, polysulfide resins, modified polysuslfide resins, polyurethane resins, polyacrylic resins, and polyacrylurethane resins.

Examples of the thermosetting resin include unsaturated polyester resins, epoxy resins, hydrosilylated crosslinked resins, phenolic resins, alkyd resins, dially phthalate resins, urea resins, polyurethane resins, and melamine resins.

Examples of the crosslinked rubber include natural rubbers, polybutadiene rubbers (PBDs), styrene-butadiene rubbers (SBRs), hydrogenated styrene-butadiene rubbers, acrylonitrile-butadiene rubbers, butyl rubbers, chlorinated butyl rubbers, chloroprene rubbers, acrylic rubbers, urethane rubbers, isoprene rubbers, ethylene-propylene rubbers, fluorine-contained rubbers, and silicone rubbers.

The resin (B) is preferably a (meth)acrylic polymer.

The component which keeps rubber and gel states is a chemically crosslinked body and/or a physically crosslinked body. The chemically crosslinked body is a rubber or gel crosslinked chemically through covalent bonds. This resin (B) is preferably a polymer having a crosslinkable functional group.

The physically crosslinked body is a crosslinked body in which bonding is created by a weak bonding energy such as thermal energy so that crosslinked points are produced or extinguished in a moving process of molecules. The bonding may be bonding between polymers, between polymer and low-molecular-weight compound, or between low-molecular weight compounds. The physically crosslinked body may be a pseudo crosslinkage generated when polymer chains are temporarily entangled with each other. As another component which keeps rubber and gel states, a liquid substance, such as a solvent or a plasticizer, may or may not be contained. The so-called low-molecular-weight gelatinizing agent may be used. Specific examples of the low-molecular-weight gelatinizing agent include a 2-ethylhexylamine adduct of isophorone diisocyanate, 1,2,3,4-dibenzylidene-D-sorbitol, 12-hydroxystearic acid, N-lauroyl-L-glutamic acid-α,γ-bis-n-butylamide, spin-labeled steroid, cholesterol derivatives, aluminumdialkyl phosphate, aluminum salts of aliphatic acids, phenolic cyclic oligomers, 2,3-bis-n-hexadesiloxyanthracene, and cyclic depsipeptide. These may be used alone or in combination of two or more thereof. The rubber and gel states in the invention are not limited to the above-mentioned examples. The states may each be such a state that the resin (B) can keep a shape at room temperature for 24 hours.

### «Composition for Damping Material»

In the invention, the composition for damping material contains the branched polymer (A) and the resin (B) , **and the resin (B) is a chemically crosslinked body and/or a physically crosslinked body.**

The amount of the branched polymer (A) is from 15 to 85% both inclusive by weight for 100% by weight of the total of the branched polymer (A) and the resin (B). The amount is preferably from 20 to 80% both inclusive by weight, more preferably from 50 to 80% both inclusive by weight thereof. If the amount is less than 15% by weight, the composition does not unfavorably produce a sufficient effect about vibration-damping property or for a rheology adjustor. If the amount is more than 85% by weight, the composition unfavorably flows easily at high temperature.

Various additives other than the branched polymer (A) and the resin (B) may be added to the composition for damping material in the invention.

### <Adhesiveness supplier>

A silane coupling agent, or an adhesiveness supplier other than silane coupling agents may be added to the composition of the invention for damping material. The addition of the adhesiveness supplier makes it possible to decrease the sealing material further in risk that this material is peeled from an adherend such as a siding board by a change in joint-opening width by external force. As the case may be, it becomes unnecessary to use a primer used to improve the material in adhesiveness. Thus, it is expected to simplify the work of construction. The silane coupling agent may be specifically, for example, a silane coupling agent having a functional group or radical such as an amino group, mercapto group, epoxy group, carboxyl group, vinyl group, isocyanate group, isocyanurate, or a halogen. Specific examples thereof include isocyanate-group-containing silanes such as γ-isocyanate propyltrimethoxysilane, γ-isocyanate propyltriethoxysialne, γ-isocyanate propylmethyldiethoxysilane and γ-isocyanate propylmethyldimethoxysilane; amino-group-containing silanes such as γ-aminopropyltrimethoxysilane, γ-aminopropyltriethoxysilane, γ-aminopropyltriisopropoxysilane, γ-aminopropylmethyldimethoxysialne, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane and N-vinylbenzyl-γ-aminopropyltriethoxysilane; mercapto-group-contianing silanes such as γ-mercaptopropyltrimethoxysilane, γ-mercaptopropyltriethoxysilane, γ-mercaptopropylmethyldimethoxysilane, and γ-mercaptopropylmethyldiethoxysilane; epoxy-group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane and P-(3,4-epoxycyclohexyl)ethyltriethoxysilane; carboxysilanes such as β-carboxyethyltriethoxysilane, P-carboxyethylphenylbis(2-methoxyethoxy)silane and N-β-carboxymethyl)aminoethyl-γ-aminopropyltrimethoxysilane; vinyl-type-unsaturated-group-containing silanes such as vinyltrimethoxysilane, vinyltriethoxysilane, γ-methacryloyloxypropylmethyldimethoxysilane, and γ-acryloyloxypropylmethyltriethoxysilane; halogen-containing silanes such as γ-chloropropyltrimethoxysilane; and isocyanurate silanes such as tris(trimethoxysilyl)isocyanurate. Derivatives obtained by modifying these examples may be used as the silane coupling agent, examples of the derivatives including amino-modified silyl polymers, silylated aminopolymers, unsaturated aminosilane complexes, phenylamino long-chain-alkyl silanes, aminosilylated silicones, block isocyanate silanes, and silylated polyesters.

The silane coupling agent used in the invention is used in an amount of 0.1 to 20 parts by weight for 100 parts by weight of the total of the branched polymer (A) and the resin (B), and is used in particular preferably in an amount of 0.5 to 10 parts by weight therefor. In the case of using various adherends, i.e., an inorganic substrate made of, for example, glass, aluminum, stainless steel, zinc, copper or mortal, and an organic substrate made of, for example, polyvinyl chloride, acrylic resin, polyester, polyethylene, polypropylene or polycarbonate, an effect of the silane coupling agent added to the curable composition of the invention shows a remarkable adhesiveness-improving effect under non-primer conditions or primer-treated conditions. When the silane coupling agent is used under non-primer conditions, the effect of improving the composition in adhesiveness to various adherends is particularly remarkable.

Specific examples of the adhesiveness supplier other than silane coupling agents include epoxy resin, phenolic resin, sulfur, alkyl titanates, and aromatic polyisocyanates although the supplier is not particularly limited.

The aforementioned adhesiveness suppliers may be used alone or may be used in the form of a mixture of two or more thereof. These adhesiveness suppliers make it possible to improve the composition in adhesiveness to an adherend when added thereto. It is preferred to use, among the above-mentioned adhesiveness suppliers, the silane coupling agent together in an amount of 0.1 to 20 parts by weight to improve the composition in adhesiveness, particularly, adhesiveness to a metallic adherend surface, such as an oil pan although the invention is not limited to this manner.

### <Plasticizer>

Various plasticizers may be used for the composition of the invention for damping material if necessary. When a plasticizer is used together with a filler that will be described later, the cured product can be increased in elongation or a large amount of a filler can be mixed with the composition so that more favorable results are obtained. However, the plasticizer may not be necessarily added. The plasticizer is not particularly limited, and may be, for example, the following in accordance with purposes such as the adjustment of the physical properties or characters: a phthalic acid ester such as dibutyl phthalate, diheptyl phthalate, di(2-ethylhexyl) phthalate, or butylbenzyl phthalate; a non-aromatic dibasic acid esters such as dioctyl adipate, dioctyl sebacate, dibutyl sebacate, or isodecyl succinate; an aliphatic ester such as butyl oleate, or methyl acetylricinolate; an ester of a polyalkylene glycol, such as diethylene glycol dibenzoate, triethylene glycol dibenzoate, or pentaerythritol ester; a phosphate such as tricresyl phosphate, or tributyl phosphate; a trimellitic acid ester; a polystyrene compound such as polystyrene, or poly-α-methylstyrene; polybutadiene, polybutene, polyisobutylene, butadiene-acrylonitrile, or polychloroprene; a chlorinated paraffin; a hydrocarbon oil such as an alkyldiphenyl, or partially hydrogenated terphenyl; a process oil; a polyether, such as polyethylene glycol, polypropylene glycol, polytetramethylene glycol or any other polyether polyol, or a derivative of such a polyether polyol that is obtained by converting hydroxyl groups of the polyether polyol to ester groups, ether groups or other groups; an epoxy plasticizer such as epoxidized soybean oil, or benzyl epoxystearate; a polyester plasticizer obtained from a dibasic acid such as sebacic acid, adipic acid, azelaic acid or phthalic acid, and a dihydric alcohol such as ethylene glycol, diethylene glycol, triethylene glycol, propylene glycol, or dipropylene glycol; or a (meth)acrylic polymer obtained by polymerizing a vinyl monomer by various methods, a typical example of the polymer being an acrylic plasticizer.

The addition of a polymeric plasticizer having a number-average molecular weight of 500 to 100000, out of the above-mentioned examples, makes it possible to adjust the curable composition in viscosity or slumping property, and adjust a cured product obtained by curing the curable composition in physical properties such as tensile strength and elongation. Additionally, as compared with the use/addition of a low-molecular-weight plasticizer, which is a plasticizer containing in the molecule thereof no polymeric component, the addition of the plasticizer makes it possible to maintain initial properties of the physical properties over a longer term and attain the following: when an alkyd paint is painted on the cured product, the dryability (referred to also as the paintability) of the paint is made better. Furthermore, the composition of the invention can be rendered an excellent material exhibiting a good vibration-damping performance (attenuation) against vibrations in the range of relatively high frequencies of about 100 to several thousands of hertz at room temperature. This polymeric plasticizer may or may not have a functional group, this matter being not limited.

It has been stated above that the number-average molecular weight of the polymeric plasticizer is from 500 to 100000. The number-average molecular weight is preferably from 800 to 10000, more preferably from 1000 to 60000. If the molecular weight is too low, the plasticizer flows out over time by heat or rainfall so that the initial properties cannot be maintained over a long term. Furthermore, the alkyd paintability may not be improved. If the molecular weight is too high, the composition is raised in viscosity to be deteriorated in workability.

Of these polymeric plasticizers, plasticizers compatible with the (meth)acrylic polymer are preferred. In particular, (meth)acrylic polymers are preferred from the viewpoint of the compatibility, and weather resistance and heat resistance. Of the (meth)acrylic polymers, any acrylic polymer is more preferred. The synthesis method of this acrylic polymer may be, for example, a polymer obtained by a conventional solution polymerization, or a solvent-free type acrylic polymer. The latter acrylic plasticizer is more preferred for the object of the invention since the plasticizer is produced by a high-temperature continuous polymerization method (USP 4414370, JP-A-59-6207, JP-B-5-58005, JP-A-1-313522, or USP 5010166) without using any solvent or chain transfer agent. Examples thereof are not particularly limited, and may be plasticizers UP series manufactured by Toagosei Co., Ltd (see "Industrial Materials", the October number, 1999). Of course, another example of the synthesis method may be living radical polymerization. According to this method, the resultant polymer is favorably narrow in molecular weight distribution, and can be made low in viscosity. However, the synthesis method is not limited to this method.

The molecular weight distribution of the polymeric plasticizer is not particularly limited, and is preferably narrow to be less than 1.8. The distribution is more preferably 1.7 or less, more preferably 1.6 or less, even more preferably 1.5 or less, in particular preferably 1.4 or less, most preferably 1.3 or less. If the molecular weight distribution is narrow, the composition of the invention can be rendered a very good material exhibiting a good vibration-damping (attenuating) performance against vibrations in the range of relatively high frequencies of about 100 to several thousands of hertz at room temperature and further a vibration-damping (attenuating) performance showing a peak at an arbitrary frequency can be designed.

About the plasticizer, examples thereof including the above-mentioned polymeric plasticizer, a species thereof may be used alone or two or more species thereof are may be used in combination. However, it is not necessarily essential to use any plasticizer. If necessary, it is allowable to use a polymeric plasticizer and furthermore use a low-molecular-weight plasticizer together as far as a bad effect is not produced onto the physical properties.

When the polymer is produced, these plasticizers may each be blended into the raw material thereof. When the plasticizer is used, the use amount thereof is not limited.

The plasticizer used in the invention is used in an amount of 0.1 to 500 parts by weight for 100 parts by weight of the total of the branched polymer (A) and the resin (B). The plasticizer is used in particular preferably in an amount of 1 to 300 parts by weight.

### <Filler>

For the composition of the invention for damping material, various fillers may be used if necessary. The fillers are each useful since the filler can generally overcome a fall in the loss coefficient (vibration-damping property) of the cured product in the range of high temperatures of, in particular, 80°C or higher although this advantage is varied in accordance with the species of the filler. The filler is not particularly limited, and examples thereof include reinforcing fillers such as woody powder, pulp, cotton chips, asbestos, glass fiber, carbon fiber, mica, walnut shell powder, chaff powder, graphite, diatomaceous earth, white clay, silicas (such as fumed silica, precipitated silica, crystalline silica, melted silica, dolomite, silicic anhydride, and hydrated silicic acid), and carbon black; heavy calcium carbonate, colloidal calcium carbonate, magnesium carbonate, diatomaceous earth, fired clay, clay, talc, titanium oxide, bentonite, organic bentonite, ferric oxide, red iron oxide, aluminum fine powder, flint powder, zinc oxide, activated zinc white, zinc powder, zinc carbonate, volcanic soil balloons, and other similar fillers; and fibrous fillers such as asbestos, glass fiber, glass filaments, carbon fiber, Kevlar fiber, and polyethylene fiber.

Of these fillers, preferred are precipitated silica, fumed silica, crystalline silica, melted silica, dolomite, carbon black, calcium carbonate, titanium oxide, and talc and others.

In the case of desiring to gain, in particular, a highly strong cured product, using the filler, one or more fillers may be added which are selected from fumed silica, precipitated silica, silicic anhydride, hydrated silicic acid, carbon black, surface-treated calcium carbonate fine powder, crystalline silica, melted silica, fired clay, clay, activated zinc white, and others. Particularly preferred is superfine powdery silica having a specific surface area (according to the BET adsorption method) of 50 m²/g or more, ordinarily about 50 to 400 m²/g, preferably about 100 to 300 m²/g. More preferred is silica having a surface subjected beforehand to hydrophobicity-giving treatment with an organic silicon compound such as an organosilane, organosilazane, or diorganocyclopolysiloxane.

More specific examples of the silica filler high in reinforcing performance include aerosil manufactured by Nippon Aerosil Co., Ltd., which is a fumed silica, and a material Nipsil manufactured by Nippon Silica Industral Co., Ltd., which is a precipitated silica although the filler is not particularly limited.

In the case of desiring to gain a cured product having a low strength and a large elongation, a filler may be added which is selected mainly from titanium oxide, calcium carbonate, talc, ferric oxide, zinc oxide, volcanic soil balloons and others. For reference, when the specific surface area of calcium carbonate is small, the carbonate may not generally produce a sufficient effect of improving the cured product in breaking strength, breaking elongation, adhesiveness and weather-resistant adhesiveness. As the specific surface area is larger, a larger effect of improving the cured product is produced in breaking strength, breaking elongation, adhesiveness and weather-resistant adhesiveness.

A calcium carbonate species subjected to surface treatment with a surface-treating agent is more preferred. It is presumed that when the surface-treated carbon carbonate species is used, the effect of improving the damping material in adhesiveness and weather-resistant adhesiveness is made better than when a non-surface-treated calcium carbonate species is used. The surface-treating agent may be an organic substance or a surfactant that may be of various types, such as an aliphatic acid, aliphatic acid soap, or an aliphatic acid ester; or may be a coupling agent that may be of various types, such as a silane coupling agent or titanate coupling agent. Specific examples thereof include without limitation aliphatic acids such as caproic acid, caprylic acid, pelargonic acid, capric acid, undecanoic acid, lauric acid, myristic acid, palmitic acid, stearic acid, behenic acid, and oleic acid; sodium and potassium salts of these aliphatic acids, and other salts thereof; and alkyl esters of these aliphatic acids. Specific examples of the surfactant include sulfate type anionic surfactants, such as polyoxyethylene alkyl ether sulfate, long-chain alcohol sulfate, and sodium and potassium salts of these sulfates; and sulfonic acid type anionic surfactants, such as alkylbenzenesulfonic acid, alkylnaphthalenesulfonic acid, paraffin sulfonic acid, α-olefinsulfonic acid, alkylsulfosuccinic acid, and sodium and potassium salts of these acids although the coupling agent is not limited thereto. The amount, for the treatment, of the surface-treating agent ranges preferably from 0.1 to 20 by weight of calcium carbonate, more preferably from 1 to 5% by weight thereof. If the treatment amount is less than 0.1% by weight, the effect of improving the workability, the adhesiveness and the weather-resistant adhesiveness may be insufficient. If the amount is more than 20% by weight, the composition for damping material may be declined in storage stability.

When calcium carbonate is used, it is preferred to use colloidal calcium carbonate in the case of expecting, in particular, the effect of improving the composition for damping in thixotropy and improving the cured product in breaking strength, breaking elongation, adhesiveness, weather-resistant adhesiveness and others; however, the invention is not limited to this manner.

Heavy calcium carbonate may be added for decreasing the viscosity of the curable composition, and increasing the weight thereof, and cost-cutting and others. When heavy calcium carbonate is used, the following species thereof may be used if necessary.

Heavy calcium carbonate is a species obtained by pulverizing/working natural chalk, marble, limestone and others mechanically. Heavy calcium carbonate is classified into various products having various average particle sizes. In the case of expecting the effect of improving the cured product in breaking strength, breaking elongation, adhesiveness and weather-resistant adhesiveness, a species having a specific surface area of 1.5 to 50 m²/g both inclusive is preferred although the invention is not particularly limited to this manner. One having a specific surface area of 2 to 50 m²/g both inclusive is more preferred, one having a specific surface area of 2.4 to 50 m²/g both inclusive is even more preferred, and one having a specific surface area of 3 to 50 m²/g both inclusive is particularly preferred. If the specific surface area is less than 1.5 m²/g, the improving effect may be insufficient. Of course, this description is inapplicable, for example, when a purpose of the carbonate is to lower the composition in viscosity or increase the composition only in weight.

The value of the specific surface area denotes a measured value according to an air permeability method (method for gaining the specific surface area from the permeability of air into a powder filled layer) conducted in accordance with JIS K 5101 as a measuring method. It is preferred to use, as a measuring device, a specific surface area meter SS-100 model manufactured by Shimadzu Corp.

These fillers may be used alone or in combination of two or more thereof if necessary. For example, when heavy calcium carbonate having a specific surface area value of 1.5 m²/g or more is combined with colloidal calcium carbonate as the need arises, a rise in the viscosity of the composition for damping material is appropriately restrained while a great expectation can be put onto the effect of improving the damping material in breaking strength, breaking elongation, adhesiveness and weather-resistant adhesiveness although the invention is not limited to this manner.

When the filler is used, the addition amount thereof ranges preferably from 5 to 1000 parts by weight, more preferably from 20 to 500 parts by weight, in particular preferably from 40 to 300 parts by weight for 100 parts by weight of the total of the branched polymer (A) and the resin (B). If the blend amount is less than 5 parts by weight, the effect of improving the cured product in breaking strength, breaking elongation, adhesiveness and weather-resistant adhesiveness may be insufficient. If the amount is more than 1000 parts by weight, the workability of the composition for damping material may be declined. About the filler, a single species thereof may be used or two or more species thereof may be used in combination.

### <Fine Hollow Particles>

These reinforcing fillers may each be used together with fine hollow particles to decrease the weight of the composition (or cured product), and costs without lowering physical properties thereof largely.

The fine hollow particles (hereinafter referred to as balloons) are not particularly limited. As described in "Newest Techniques of Functional Filler" (CMC), the balloons may be hollow bodies made of an inorganic and organic material, respectively, and each having a diameter of 1 mm or less, preferably 500 µm or less, even more preferably 200 µm or less. In particular, the balloons are preferably fine hollow bodies having a true specific gravity of 1.0 g/cm³ or less, more preferably fine hollow bodies having a true specific gravity of 0.5 g/cm³ or less.

The inorganic balloons are, for example, silicic-acid-based balloons and non-silicic-acid-based balloons. Examples of the silicic-acid-based balloons include volcanic soil balloons, perlite, glass balloons, silica balloons, and fly ash balloons. Examples of the non-silicic-acid-based balloons include alumina balloons, zirconia balloons, and carbon balloons. Specific examples of these inorganic balloons are as follows: Examples of the volcanic soil balloons include WINLIGHT (transliterated) manufactured by Ichiji Kasei (transliterated), and SUNKILIGHT (transliterated) manufactured by Sanki Kogyo (transliterated). Examples of the glass balloons include KARURNE (transliterated) manufactured by Nippon Sheet Glass Co., Ltd., CELLSTAR Z-28 manufactured by Sumitomo 3M Ltd., MICRO BALLOON manufactured by Emerson & Cuming, CELAMIC GLASSMODULES manufactured by Pittsburge Corning, and GLASS BUBBLES manufactured by 3M Co. Examples of the silica balloons include Q-CEL manufactured by Asahi Glass Co., Ltd., and E-SPHERES manufactured by Taiheiyo Cement Corp. Examples of the fly ash balloons include CEROSPHERES manufactured by Pfamarketing, and FILLITE manufactured by Fillite U.S.A.. Examples of the alumina balloons include BW manufactured by Showa Denko K.K.. Examples of the zirconia balloons include HOLLOW ZIRCONIUM SPHEES manufactured by Zircoa. Examples of the carbon balloons include KUREKASPHERE manufactured by Kureha Corp., and CARBOSPHERE manufactured by General Technologies.

The organic balloons are, for example, thermosetting resin balloons, and thermoplastic resin balloons. Examples of the thermosetting resin balloons include phenolic balloons, epoxy balloons, and urea balloons. Examples of the thermoplastic resin balloons include Saran balloons, polystyrene balloons, polymethacrylate balloons, polyvinyl alcohol balloons, and styrene-acrylic balloons. Crosslinked thermoplastic resin balloons may be used. The balloons referred to herein may be foamed balloons, or balloons obtained by blending raw materials containing a foaming agent with each other, and foaming the blend after the blending.

Specific examples of these organic balloons are as follows: Examples of the phenolic balloons include UCAR and PHENOLIC MICROBALLONES manufactured by Union Carbide Corp. Examples of the epoxy balloons include ECCOSPHERES manufactured by Emerson & Cuming. Examples of the urea balloons include ECCOSPHERES VF-O manufactured by Emerson & Cuming. Examples of the Saran balloons include SARAN MICROSPHERES manufactured by Dow Chemical, EXPANCEL manufactured by Japan Fillite Co., Ltd., and MATSUMOTO MICROSPHERES manufactured by Matsumoto Yushi-Seiyaku Co., Ltd. Examples of the polystyrene balloons include DYLITE EXPANDABLE POLYSTYRENE manufactured by Arco Polymers, and EXPANDABLE POLYSTYRENE BEADS manufactured by BASF Wyandote. Examples of the crosslinked styrene-acrylic balloons include SX863(P) manufactured by Japan Synthetic Rubber Co., Ltd.

These balloon species may be used alone or in the form of a mixture of two or more thereof. Products obtained by treating surfaces of these balloon species may be used in order to improve the balloons in dispersibility and the composition in workability; examples of an agent for the treatment include aliphatic acids, aliphatic acid esters, rosin, rosin acid lignin, silane coupling agents, titanium coupling agents, aluminum coupling agents, and polypropylene glycol. These balloons are used to decrease the weight of a product obtained by curing the blend without damaging the flexibility nor elongation/strength out of physical properties of this product, thus decreasing costs.

The content of the balloons is not particularly limited, and is preferably from 0.1 to 50 parts by weight, more preferably from 0.1 to 30 parts by weight for 100 parts by weight of the total of the branched polymer (A) and the resin (B). If this content is less than 0.1 parts by weight, the weight-decreasing effect is small. If the content is 50 parts or more by weight, the tensile strength among the mechanical properties may be lowered. When the specific gravity of the balloons is 0.1 or more, the content is preferably from 3 to 50 parts by weight, more preferably from 5 to 30 parts by weight.

### <Physical Property Adjustor>

If necessary, a physical property adjustor may be added to the composition of the invention for damping material to adjust the tensile property.

The physical property adjustor is not particularly limited. Examples thereof include alkylalkoxysilanes such as methyltrimethoxysilane, dimethyldimethoxysilane, trimethylmethoxysialne, and n-propyltrimethoxysilane; alkylisopropenoxysilanes such as dimethyldiisopropenoxysilane, methyltriisopropenoxysilane, and γ-glycidoxypropylmethyldiisopropenoxysilane; and alkoxysilanes having a functional group, such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysialne, and γ-mercaptopropylmethyldimethoxysilane; silicone varnish; and polysiloxanes. The use of the physical property adjustor makes it possible to raise or lower the hardness of any damping material obtained by curing the composition of the invention for damping material, or elongate the material. About the physical property adjustor, a single species may be used, or two or more species thereof may be used in combination.

The content of the physical property adjustor is not particularly limited, and ranges preferably from 0.1 to 200 parts by weight, more preferably from 1 to 50 parts by weight for 100 parts by weight of the total of the branched polymer (A) and the resin (B).

### <Silanol-Containing Compound>

If necessary, one or more silanol-containing compounds may be added to the composition of the invention for damping material, for example, to vary the vibration-damping property. The silanol-containing compound(s) denote(s) a compound having in the molecule thereof one silanol group, and/or a compound that can react with water to produce a compound having in the molecule thereof one silanol group. Only one of the two may be used, or the two compounds may be simultaneously used.

The compound having in the molecule thereof one silanol group, which is one of the silanol-containing compounds, is not particularly limited. The compound is, for example, a compound that can be represented by (R")₃SiOH wherein R"s, which are the same or different, are each a substituted or unsubstituted alkyl or aryl group. Examples of the compound include (CH₃)₃SiOH, (CH₃CH₂)₃SiOH, (CH₃CH₂CH₂)₃SiOH, (n-Bu)₃SiOH, (sec-Bu)₃SiOH, (t-Bu)₃SiOH, (t-Bu)Si(CH₃)₂OH, (C₅H₁₁)₃SiOH, (C₆H₁₃)₃SiOH, (C₆H₅)₃SiOH, (C₆H₅)₂Si(CH₃)OH, (C₆H₅)Si(CH₃)₂OH, (C₆H₅)₂Si(C₂H₅)OH, C₆H₅Si(C₂H₅)₂OH, C₆H₅CH₂Si(C₂H₅)₂OH, and C₁₀H₇Si(CH₃)₂OH wherein each C₆H₅ represent a phenyl group, and C₁₀H₇ represents a naphthyl group. Of these compounds, compounds each represented by the following general formula (10) are preferred:

(R⁵⁸)₃SiOH (10)

wherein R⁵⁸s each represent a monovalent hydrocarbon group having 1 to 20 carbon atoms, and may be the same or different.

R⁵⁸s are each preferably a methyl, ethyl, vinyl, t-butyl or phenyl group, more preferably a methyl group.

Of these compounds, (CH₃)₃SiOH or the like, which is small in molecular weight, is preferred because of easy availability and advantageous effects thereof.

It is presumed that when the (meth)acrylic polymer having a crosslinkable silyl group is used, the above-mentioned compound having in the molecule thereof one silanol group reacts with the crosslinkable silyl group or a siloxane bond produced by the crosslinking of the silyl group, thus decreasing the number of crosslinked points to give flexibility to the damping material.

The compound that can react with water to produce a compound having in the molecule thereof one silanol group, so as to be usable in the damping material of the invention, is not particularly limited. The compound (hydrolyzate) having in the molecule thereof one silanol group, which is produced by the reaction with water, is preferably a compound represented by the above-mentioned general formula (10). Examples thereof include the following compounds besides compounds each represented by a general formula (11) described later although the compound is not particularly limited:

N,O-bis(trimethylsilyl)acetoamide, N-(trimethylsilyl)acetoamide, bis(trimethylsilyl)trifluoroacetoamide, N-methyl-N-trimethylsilyltrifluoroacetoamide, bistrimethylsilylurea, N-(t-butyldimethylsilyl)N-methyltrifluoroacetoamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyltrifluoromethane sulfonate, trimethylsilylphenoxide, a trimethyl- silylated product of n-octanol, a trimethyl-silylated product of 2-ethylhexanol, a tris(trimethyl- silylated) product of glycerin, a tris(trimethyl-silylated) product of trimethylolpropane, a tris(trimethyl-silylated) product of pentaerythritol, a tetra(trimethyl-silylated) product of pentaerythritol, (CH₃)₃SiNHSi(CH₃)₃, and (CH₃)₃SiNSi(CH₃)₂, which can be preferably used. From the viewpoint of the amount of silanol groups contained in the hydrolyzate, (CH₃)₃SiNHSi(CH₃)₃ is particularly preferred.

The compound that can react with water to produce a compound having in the molecule thereof one silanol group, so as to be usable in the damping material, is not particularly limited, and is preferably a compound represented by the following general formula (11) besides the above-mentioned compounds:

((R⁵⁸)₃SiO)ₙR⁵⁹ (11)

wherein R⁵⁸s are the same as described above, n is a positive number, and R⁵⁹ is a group obtained by removing, from an active-hydrogen-containing compound, the active hydrogen atom(s) wholly or partially.

R⁵⁸s are each preferably a methyl, ethyl, vinyl, t-butyl or phenyl group, more preferably a methyl group.

The (R⁵⁸)₃Si group is in particular preferably a trimethyl silyl group, wherein three R⁵⁸s are each a methyl group. The number n is preferably from 1 to 5.

The active-hydrogen-containing compound, from which R⁵⁹ is originated, is not particularly limited. Examples thereof include alcohols such as methanol, ethanol, n-butanol, i-butanol, t-butanol, n-octanol, 2-ethylhexanol, benzyl alcohol, ethylene glycol, diethylene glycol, polyethylene glycol, propylene glycol, dipropylene glycol, polypropylene glycol, propanediol, tetramethylene glycol, polytetramethylene glycol, glycerin, trimethylolpropane, and pentaerythritol; phenolic compounds such as phenol, cresol, bisphenol A, and hydroquinone; carboxylic acids such as formic acid, acetic acid, propionic acid, lauric acid, palmitic acid, stearic acid, behenic acid, acrylic acid, methacrylic acid, oleic acid, linoleic acid, linolenic acid, sorbic acid, oxalic acid, malonic acid, succinic acid, adipic acid, maleic acid, benzoic acid, phthalic acid, terephthalic acid, and trimellitic acid; ammonia; amines such as methylamine, dimethylamine, ethylamine, diethylamine, n-butylamine, and imidazole; acid amides such as acetoamide, and benzamide; ureas such as urea, N,N'-diphenylurea; and ketones such as acetone, acetylacetone, and 2,4-heptadione.

The compound represented by the general formula (11), which can react with water to produce a compound having in the molecule thereof one silanol group, may be obtained, for example, by causing the above-mentioned active-hydrogen-containing compound or the like to react with trimethylsilyl chloride, dimethyl(t-butyl) chloride, or any other compound that has not only (R⁵⁸)₃Si group but also a group or radical which can react with active hydrogen, such as a halogen radical, and that may be called a sililation agent (provided that R⁵⁸s are the same as described above). However, the method for obtaining the compound is not limited to this method.

Specific examples of the compound represented by the general formula (11) include allyoxytrimethylsilane, N,O-bis(trimethylsilyl)acetoamide, N-(trimethylsilyl)acetoamide, bis(trimethylsilyl)trifluoroacetoamide, N-methyl-N-trimethylsilyltrifluoroacetoamide, bistrimethylsilylurea, N-(t-butyldimethylsilyl)N-methyltrifluoroacetoamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyltrifluoromethane sulfonate, trimethylsilylphenoxide, a trimethyl-silylated product of n-octanol, a trimethyl-silylated product of 2-ethylhexanol, a tris(trimethyl-silylated) product of glycerin, a tris(trimethyl-silylated) product of trimethylolpropane, a tris(trimethyl-silylated) product of pentaerythritol, and a tetra(trimethyl-silylated) product of pentaerythritol. However, the compound is not limited thereto. These may be used alone or in combination of two or more thereof.

A compound as represented by a general formula (((R⁶⁰)₃SiO)(R⁶¹O)ₛ)ₜZ can be preferably used wherein R⁶⁰s, which may be the same or different, are each a substituted or unsubstituted monovalent hydrocarbon group or a hydrogen atom, R61 is a bivalent hydrocarbon group having 1 to 8 carbon atoms, s and t are each a positive integer, s is from 1 to 6, "s x t" is 5 or more, and Z is an organic group having 1 to 6 valances. Examples of the compound include:

CH₃O(CH₂CH(CH₃)O)₅Si(CH₃)₃,

CH₂=CHCH₂(CH₂CH(CH₃)O)₅Si(CH₃)₃,

(CH₃)₃SiO(CH₂CH(CH₃)O)₅Si(CH₃)₃,

and

(CH₃)₃SiO(CH₂CH(CH₃)O)₇Si(CH₃)₃.

These may be used alone or in combination of two or more thereof.

Among compounds which can each react with water to produce a compound having in the molecule thereof one silanol group, preferred are compounds about each of which after the compound is hydrolyzed the produced active-hydrogen-containing compound is a phenolic compound, an acid amide or an alcohol in that they have no adverse affect on storage stability and weather resistance. More preferred are compounds about each of which the active-hydrogen-containing compound is a phenolic compound or alcohol, which has a hydroxyl group.

Among the above-mentioned compounds, preferred are N,O-bis(trimethylsilyl)acetoamide, N-(trimethylsilyl)acetoamide, trimethylsilylphenoxide, a trimethyl-silylated product of n-octanol, a trimethyl-silylated product of 2-ethylhexanol, a tris(trimethyl-silylated) product of glycerin, a tris(trimethyl-silylated) product of trimethylolpropane, a tris(trimethyl-silylated) product of pentaerythritol, a tetra(trimethyl-silylated) product of pentaerythritol, and others.

This compound, which can react with water to produce a compound having in the molecule thereof one silanol group, reacts with water when stored or synthesized or after synthesized, thus producing the compound having in the molecule thereof the one silanol group. As describe above, it is presumed that when the (meth)acrylic polymer having a crosslinkable silyl group is used, the thus-produced compound having in the molecule thereof the one silanol group reacts with the crosslinkable silyl group or a siloxane bond produced by the crosslinking of the silyl group, thus decreasing the number of crosslinked points to give flexibility to the cured product.

The addition amount of the silanol-containing compound may be appropriately adjusted in accordance with expected physical properties of the damping material.

The timing when the silanol-containing compound is added to the composition for damping material is not particularly limited. Thus, the compound may be added when the branched polymer is produced, or when the polymer is made into a resin, rubber or gel state.

The content of the silanol-containing compound is not particularly limited, and is preferably from 0.1 to 200 parts by weight, more preferably from 1 to 50 parts by weight for 100 parts by weight of the total of the branched polymer (A) and the resin (B).

### <Thixotropy Supplier (Drip Preventive)>

If necessary, a thixotropy supplier (drip preventive) may be added to the composition of the invention for damping material to prevent the composition from dripping, thus improving the composition in workability.

The drip preventive is not particularly limited, and examples thereof include hydrogenated castor oil derivatives; and metal soaps such as calcium stearate, aluminum stearate, and barium stearate. These thixotropy suppliers (drip preventives) may be used alone or in combination of two or more thereof.

The content of the thixotropy supplier is not particularly limited, and is preferably from 0.1 to 100 parts by weight, more preferably from 1 to 50 parts by weight for 100 parts by weight of the total of the branched polymer (A) and the resin (B).

### <Photocurable Material>

If necessary, a photoreactive material may be added to the composition of the invention for damping material. The photoreactive material is a material which receives optical effect to undergo a chemical change in the molecular structure thereof in a short period, thus undergoing a physical change such as curing. The addition of this photoreactive material can decrease the adhesiveness (called remaining tackiness as the case may be) of the damping material when the damping material is made into a resin, rubber or gel state. This photocurable material is a material curable when light is applied thereto. A typical example of the photocurable material is a material curable when the material is allowed to stand still at room temperature at an indoor position to which sunlight is radiated (near a window) for one day. As such compounds, known are many substances such as organic monomers, oligomers, resins, and compositions containing one or more thereof. The type thereof is not particularly limited. Examples thereof include an unsaturated acrylic compound, a polyvinyl cinnamate compound, and an azidated resin.

The unsaturated acrylic compound is a monomer or oligomer having an unsaturated group represented by the following general formula (12), or a mixture of these:

CH₂=CHR⁶²CO(O)- (12)

wherein R⁶² represents hydrogen, an alkyl group having 1 to 10 carbon atoms, an aryl group having 6 to 10 carbon atoms, or an aralkyl group having 7 to 10 carbon atoms.

Specific examples of the unsaturated acrylic compound include (meth)acrylates of any low-molecular-weight alcohol such as ethylene glycol, glycerin, trimethylolpropane, pentaerythritol or neopentyl alcohol; (meth)acrylates of any alcohol obtained by modifying bisphenol A, an acid such as isocyanuric acid, or the low-molecular-weight alcohol with ethylene oxide or propylene oxide; polyether polyols each having a polyether as its main chain and a hydroxide group at its terminal, polymer polyols each obtained by radical-polymerizing a vinyl monomer in a polyol having a polyether as its main chain, polyester polyols each having a polyester as its main chain and a hydroxyl group at its terminal, and (meth)acrylates such as polyol each having a vinyl or (meth)acrylic polymer as its main chain and each having a hydroxyl group in the main chain; epoxy acrylate oligomers each obtained by causing an epoxy resin of a bisphenol A type, a novolak type or some other type to react with (meth)acrylic acid; and urethane acrylate oligomers each having a urethane bond and a (meth)acrylic group in a molecular chain obtained by causing a polyol, a polyisocyanate, a hydroxyl-containing (meth)acrylate and/or some other to react with each other.

The polyvinyl cinnamate compound is a photosensitive resin having a cinnamoyl group as a photosensitive group. Examples thereof include polyvinyl alcohol esterified with cinnamic acid, and many other polyvinyl cinnamate derivatives.

The azidated resin is known as a photosensitive resin having an azide group as a photosensitive group. The resin is usually a photosensitive rubbery liquid to which an azide compound is added as a photosensitive agent. Additionally, detailed examples are described in "Photosensitive Resin" (published on March 17, 1972 and issued by Insatsu Gakkai Shuppanbu Ltd.; page 93 and subsequent pages, page 106 and subsequent pages, and page 117 and subsequent pages). These may be used alone or in the form of a mixture in the state that a sensitizer is added thereto if necessary.

Among these photoreactive materials, the unsaturated acrylic compound is preferred since the compound is easily handleable.

The photoreactive material is added preferably in an amount of 0.01 to 20 parts by weight for 100 parts by weight of the total of the branched polymer (A) and the resin (B). If the amount is less than 0.01 parts by weight, the advantageous effect is small. If the amount is more than 20 parts by weight, a bad effect may be produced onto the physical properties. The advantageous effect may be heightened by adding a sensitizer, such as a ketone or a nitro compound, or a promoter, such as an amine, thereto.

### <Air Oxidatively Curable Material>

If necessary, an air oxidatively curable material may be added to the damping material of the invention. The air oxidatively curable material is a compound having an unsaturated group crosslinkable/curable by oxygen in air. The addition of this air oxidatively curable material decreases the surface of the damping material in adhesiveness (called remaining tackiness as the case may be). The air oxidatively curable material in the invention is a material that is brought into contact with air to be curable. The material is more specifically a material having a nature of reacting with oxygen in air to be cured. A typical example of the air oxidatively curable material is curable, for example, by allowing this example to stand still in the air indoors for 1 day.

Specific examples of the air oxidatively curable material include dry oils such as tung oil, and linseed oil; various alkyd resins obtained by modifying these dry oils; acrylic polymers, epoxy resins and silicone resins each modified with a dry oil; 1,2-polybutadiene, 1,4-polybutadiene, and C5 to C8 diene polymers or copolymers, and various modified products (such as maleic-acid-modified products or boiled-oil-modified products) of the polymers or copolymers. Of these examples, particularly preferred are tungsten oil, liquid materials (liquid diene polymers) of the diene polymers, and modified products thereof.

Specific examples of the liquid diene polymers include liquid polymers each obtained by polymerizing or copolymerizing a diene compound such as butadiene, chloroprene, isoprene or 1,3-pentadiene; NBR, SBR and other polymers each obtained by copolymerizing acrylonitrile, styrene or some other monomer copolymerizable with these diene compounds with one or more of the diene compounds to make the compound(s) into main moieties; and various modified products (such as maleic-acid-modified products or boiled-oil-modified products) of these examples. These may be used alone or in combination of two or more thereof. Of these liquid diene polymers, liquid polybutadiene is preferred.

About the air oxidatively curable material, a single species thereof or two or more species thereof may be used. When the air oxidatively curable material is used together with a catalyst for promoting the oxidative curing reaction, or a metal drier, the advantageous effect may be heightened. Examples of the catalyst or the metal drier include metal salts such as cobalt naphthenate, lead naphthenate, zirconium naphthenate, cobalt octylate and zirconium octylate, and amine compounds.

The content of the air oxidatively curable material is not particularly limited, and is preferably from 0.1 to 100 parts by weight, more preferably from 1 to 50 parts by weight for 100 parts by weight of the total of the branched polymer (A) and the resin (B).

### <Antioxidant>

If necessary, an antioxidant may be added to the composition of the invention for damping material. As the antioxidant, various types are known. Examples thereof include various antioxidants described in "Antioxidant Handbook" published by Taisei-Sha (transliterated), and "Deterioration and Stabilization of Polymeric material" (235-242) published by CMC Publishing Co., Ltd and others. However, the antioxidant is not limited to these examples.

Other examples thereof include thioether antioxidants such as MARK PEP-36, and MARK AO-23 (each manufactured by Adeka Argus Chemical Co., Ltd.), and phosphorous-containing antioxidants such as Irgafos 38, and Irgafos 168, and Irgafos P-EPQ (each manufactured by Nihon Ciba-Geigy K.K.). Among antioxidants, hindered phenolic compounds as described below are preferred.

Specific examples of the hindered phenolic compounds include 2,6-di-tert-butyl-4-methylphenol, 2,6-di-tert-butyl-4-ethylphenol, mono (or di or tri) (α methylbenzyl)phenol, 2,2'-methylenebis(4 ethyl-6-tert-butylphenol), 2,2'-methylenebis(4 methyl-6-tert-butylphenol), 4,4'-butylidenebis(3-methyl-6-tert-butylphenol), 4,4'-thiobis(3-methyl-6-tert-butylphenol), 2,5-di-tert-butylhydroquinone, 2,5-di-tert-amylhydroquinone, triethylene glycol-bis-[3-(3-t-butyl-5-methyl-4 hydroxyphenyl propionate], 1,6-hexanediol-bis[3-(3,5-di-t-butyl-4 hydroxyphenyl) propionate], 2,4-bis-(n-octylthio)-6-(4-hydroxy-3,5-di-t-butylanilino)-1,3,5-triazine, pentaerythrityl-tetrakis[3-(3,5-di-t-butyl-4-hydroxyphenyl) propionate], 2,2-thio-diethylenebis[3-(3,5-di-t-butyl-4-hydroxyphenyl) propionate], octadecyl-3-(3,5-di-t-butyl-4-hydroxyphenyl) propionate, N,N'-hexamethylenebis(3,5-di-t-butyl-4-hydroxy-hydrocinnamide), diethyl 3,5-di-t-butyl-4-hydroxy-benzylphosphonate, 1,3,5-trimethyl-2,4,6-tris(3,5-dit-butyl-4-hydroxybenzyl)benzene, bis(ethyl 3,5-di-t-butyl-4-hydroxybenzylphosphonate) calcium, tris-(3,5-di-t-butyl-4-hydroxybenzyl) isocyanurate, 2,4-2,4-bis[(octylthio)methyl]o-cresol, N,N'-bis[3-(3,5-di-t-butyl-4-hydroxyphenyl)propionyl]hydrazine, tris(2,4-di-t-butylphenyl)phosphate, 2-(5-methyl-2-hydroxyphenyl)benzotriazole, 2-[2-hydroxy-3,5-bis(α,α-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl)benzotriazole, 2-(2'-hydroxy-5'-t-octylphenyl)-benzotriazole, a condensate made from methyl-3-[3-t-butyl-5-(2H-benzotriazole-2-yl)-4-hydroxyphenyl]propionate and polyethylene glycol (molecular weight: about 300), hydroxyphenylbenzotrizole derivatives, 2-(3,5-di-t-butyl-4-hydroxybenzyl)-2-n-butylmalonic acid bis(1,2,2,6,6-pentamethyl-4-piperidyl), and 2,4-di-t-butylphenyl-3,5-di-t-butyl-4-hydroxybenzoate.

Examples of trade names thereof include NOCLAK 200, NOCLAK M-17, NOCLAK SP, NOCLAK SP-N, NOCLAK NS-5, NOCLAK NS-6, NOCLAK NS-30, NOCLAK 300, NOCLAK NS-7, and NOCLAK DAH (each manufactured by Ouchi Shinko Chemical Industrial Co., Ltd.); MARK AO-30, MARK AO-40, MARK AO-50, MARK AO-60, MARK AO-616, MARK AO-635, MARK AO-658, MARK AO-80, MARK AO-15, MARK AO-18, MARK 328, and MARK AO-37 (each manufactured by Adeka Argus Chemical Co., Ltd.); IRGANOX-245, IRGANOX-259, IRGANOX-565, IRGANOX-1010, IRGANOX-1024, IRGANOX-1035, IRGANOX-1076, IRGANOX-1081, IRGANOX-1098, IRGANOX-1222, IRGANOX-1330, and IRGANOX-1425WL (each manufactured by Nihon Ciba-Geigy K.K.); and Sumilizer GM, and Sumilizer GA-80 (each manufactured by Sumitomo Chemical Co., Ltd.). However, the hindered phenolic compounds are not limited thereto.

The antioxidant may be used in combination with a light stabilizer that will be described later. The use in the combination causes the antioxidant to exhibit the advantageous effect thereof further. The use is particularly preferred since the use may improve the composition of the invention in weather resistance. For example, TINUVIN C353, TINUVIN B75 (each manufactured by Nihon Ciba-Geigy K.K.) may be used, in which an antioxidant and a light stabilizer may be beforehand mixed with each other.

The use amount of the antioxidant is preferably from 0.1 to 10 parts by weight for 100 parts by weight of the total of the branched polymer (A) and the resin (B). If the amount is less than 0.1 parts by weight, the effect of improving the weather resistance is small. Even if the amount is more than 10 parts by weight, a great advantageous-effect-difference is not generated so that an economical disadvantage is caused.

### <Light Stabilizer>

If necessary, a light stabilizer may be added to the composition of the invention for damping material. As the light stabilizer, various types are known. Examples thereof include various light stabilizers described in "Antioxidant Handbook" published by Taisei-Sha, and "Deterioration and Stabilization of Polymeric material" (235-242) published by CMC Publishing Co., Ltd and others. However, the light stabilizer is not limited to these examples.

Although the light stabilizer is not particularly limited, an ultraviolet absorbent is preferred among light stabilizers. Specific examples thereof include benzotriazole compounds such as TINUVIN P, TINUVIN 234, TINUVIN 320, TINUVIN 326, TINUVIN 327, TINUVIN 329, and TINUVIN 213 (each manufactured by Nihon Ciba-Geigy K.K.); triazine compounds such as TINUVIN 1577; benzophenone compounds such as CHIMASSORB 81; and benzoate compounds such as TINUVIN 120 (Nihon Ciba-Geigy K.K.).

A hindered amine compound is also preferred. Examples of the compound include a dimethyl succinate-1-(2-hydroxyethyl)-4-hydroxy-2,2,6,6-tetramethylpiperidine polycondensate, poly[{6-(1,1,3,3-tetramethylbutyl)amino-1,3,5-triazine-2,4-diyl}{(2,2,6,6-tetramethyl-4-pyperidyl)imino}], an N,N'-bis(3 aminopropyl)ethylenediamine-2,4-bis[N-butyl-N-(1,2,2,6,6-pentamethyl)-4-piperidyl]amino]-6-chloro-1,3,5-triazine condensate, bis(2,2,6,6-tetramethyl-4-piperidyl) sebacate, and bis(2,2,6,6-tetramethyl-4-piperidinyl) succinate.

Examples of trade names thereof include, without limitation, TINUVIN 622LD, TINUVIN 144, CHIMASSORB 944LD, CHIMASSORB 119FL, and Irgafos 168 (each manufactured by Nihon Ciba-Geigy K.K.); MARK LA-52, MARK LA-57, MARK LA-62, MARK LA-67, MARK LA-63, MARK LA-68, MARK LA-82, and MARK LA-87 (each manufactured by Adeka Argus Chemical Co., Ltd.); and SANOL LS-770, SANOL LS-765, SANOL LS-292, SANOL LS-262, SANOL LS-1114, SANOL LS-744, and SANOL LS-440 (each manufactured by Sankyo Co., Ltd.).

A combination of the hindered amine compond with an ultraviolet absorbent may produce the advantageous effect further. Thus, the use of the combination is permissible, and is frequently preferred although the invention is not limited to this manner.

The light stabilizer may be used in combination with the above-mentioned antioxidant. The use in the combination is particularly preferred since the use may produce the advantageous effect further to improve the composition in weather resistance. For example, TINUVIN C353, TINUVIN B75 (each manufactured by Nihon Ciba-Geigy K.K.) may be used, in which a light stabilizer and an antioxidant may be beforehand mixed with each other.

The use amount of the light stabilizer is preferably from 0.1 to 10 parts by weight for 100 parts by weight of the total of the branched polymer (A) and the resin (B). If the amount is less than 0.1 parts by weight, the effect of improving the weather resistance is small. Even if the amount is more than 10 parts by weight, a great advantageous-effect-difference is not generated so that an economical disadvantage is caused.

### <Releasing Agent>

If necessary, a releasing agent (metal soap) may be further incorporated into the damping material of the invention.

The metal soap is not particularly limited, and may be any metal soap. Metal soap is generally a substance in which a long-chain aliphatic acid is bonded to a metal ion. When a substance has, in a single molecule thereof, both of a nonpolar or low-polar moiety based on an aliphatic acid, and a polar moiety based on a bonding portion of the acid and a metal, the substance can be used.

Examples of the long-chain aliphatic acid include saturated aliphatic acids having 1 to 18 carbon atoms, unsaturated aliphatic acids having 3 to 18 carbon atoms, and aliphatic dicarboxylic acids. Of these examples, preferred are saturated aliphatic acids having 1 to 18 carbon atoms from the viewpoint of availability, and particularly preferred are saturated aliphatic acids having 6 to 18 carbon atoms from the viewpoint of the effect of releasing performance.

Examples of the metal ion include alkali metals (such as lithium, sodium and potassium), alkaline earth metals (such as magnesium, calcium, and barium), zinc, lead, cobalt, aluminum, manganese, and strontium.

Specific examples of the metal soap include lithium stearate, lithium 12-hydroxystearate, lithium laurate, lithium oleate, lithium 2-ethylhexanoate, sodium stearate, sodium 12-hydroxystearate, sodium laurate, sodium oleate, sodium 2-ethylhexanoate, potassium stearate, potassium 12-hydroxystearate, potassium laurate, potassium oleate, potassium 2-ethylhexanoate, magnesium stearate, magnesium 12-hydroxystearate, magnesium laurate, magnesium oleate, magnesium 2-ethylhexanoate, calcium stearate, calcium 12-hydroxystearate, calcium laurate, calcium oleate, calcium 2-ethylhexanoate, barium stearate, barium 12-hydroxystearate, barium laurate, barium ricinoleate, zinc stearate, zinc 12-hydroxystearate, zinc laurate, zinc oleate, zinc 2-ethylhexanoate, lead stearate, lead 12-hydroxystearate, cobalt stearate, aluminum stearate, and manganese oleate.

Of these metal soaps, metal salts of stearic acid are preferred from the viewpoint of availability and safety. From an economical viewpoint, most preferred are one or more selected from the group consisting of calcium stearate, magnesium stearate and zinc stearate.

The addition amount of the metal soap(s) is not particularly limited.

The content of the releasing agent is not particularly limited, and is preferably from 0.1 to 100 parts by weight, more preferably from 1 to 50 parts by weight for 100 parts by weight of the total of the branched polymer (A) and the resin (B).

### <Other Additives>

If necessary, various additives may be added to the composition of the invention for damping material to adjust various properties of the curable composition or the cured product. Examples of the additives include a flame retardant, an anti-ageing agent, a radical inhibitor, a metal inactivating agent, an antiozonant, a phosphorous-containing peroxide decomposer, a lubricant, a pigment, and a foaming agent. The various additives may be used alone or in combination of two or more thereof.

Specific examples of the additives are described in respective specifications of JP-B-4-69659, JP-B-7-108928, JP-A-63-254149, and JP-A-64-22904.

The method for preparing the damping material of the invention is not particularly limited. The material may be prepared in a one-liquid form such that all blend components are beforehand blended and then stored in a sealed state, and the blend is cured by humidity in the air after the blend is applied to an actual spot, or in a two-liquid form such that a curing catalyst, a filler, a plasticizer, water and other components are separately blended as a hardener, and this blend is mixed with a polymer composition before the damping material is used. In the case of making the material into the two-liquid form, a colorant may be added, when the two components are mixed with each other, thereto. When the colorant is, for example, in the form of a paste in which a pigment is mixed with a plasticizer and optionally with a filler, the colorant is high in workability. When the two components are mixed with each other, a retarding agent may be added thereto, thus making it possible to adjust the curing speed minutely, correspondingly to a working spot.

### << Damping Material>>

The damping material obtained by curing the composition of the invention for damping material, which comprises a branched polymer (A) and a resin (B), can be used as an excellent damping material. In other words, this damping material, which turns to a resin, rubber or gel state, has a high vibration-damping performance (tanδ: 0.2 or more) against vibrations against a particularly low frequency range (several hertz or more) in a temperature range near room temperature (-20 to 20°C).

### «Rheology Adjustor»

The rheology adjustor of the invention is characterized by comprising a branched polymer (A). This characteristic is the structure of the branched polymer (A), and is in that respective single-side terminals of all branches thereof are bonded to each other, and because of its bonded points, chains of the branched polymer (branch) are very small in diffusion speed. Thus, in a temperature range near room temperature, the adjustor can exhibit a high vibration-damping performance even against vibrations of low frequencies. As described above, as the chains of the branched polymer (branch) are higher in molecular weight, the chains are smaller in diffusion speed. Thus, a high vibration-damping performance can be designed against vibrations in a lower frequency range (several hertz or more). The rheology adjustor can lead to an excellent damping material in accordance with its branched structure, independently of the main chain structure of the branched polymer. When the rheology adjustor needs to keep a shape thereof, the adjustor needs only to be in a resin, rubber or gel state. This may be a material entirely different from the branched polymer (A). In other words, as far as a material can realize a resin, rubber or gel state, the material is usable without any limitation. When the branched polymer (A) is used as a rheology adjustor, the shape thereof is not limited. Thus, a great advantage is produced that vibration-damping performance can be separately designed from other various physical properties. The damping material according to the invention is a point that no glass-rubber transition temperature is used. As will also be described in working examples, the glass-rubber transition temperature of each obtained material is about -45°C; thus, a high vibration-damping performance (tanδ: 0.2 or more) thereof in a temperature range near room temperature (-20 to 20°C) is not a performance using any glass-rubber transition temperature.

### «Usage»

The damping material and the rheology adjustor of the invention may be used as various materials because of a high design flexibility thereof. Examples of the materials include impact absorbing material, impact relieving material, vibration absorbing material, vibration insulating material, vibration transmitting material, displacement absorbing material, displacement transmitting material, stress absorbing material, stress relieving material, stress transmitting material, pressure dispersing material, vibration-proof material, damping material, packaging material, soundproof material, sound absorbing material, sound shielding material, insulating material, moisture-proof material, anticorrosive material, and rust preventing material. Examples of articles in which these materials are used include sports articles such as shoes and a protector; health, medical and caring articles such as bedclothes, a pillow, a cushion, a mattress, and a pad for preventing a wound; electrical and electronic articles such as a clock, a watch, a portable telephone, a camera, a scanner, a personal computer, a printer, an information memorizing element (memory), a game player, an electronic dictionary, a music regenerating device, a television, a video system, a DVD player/recorder, a blue ray disk player/recorder, a projector, a picture regenerating device, a stepping motor, a magnetic disk, a hard disk, a microphone, a recorder, a telephone, a refrigerator, a rice cooker, an oven, a microwave oven, an electromagnetic cooking device, a tableware washer, an air-conditioner, an electric fan, an air cleaner, a humidifier, a dehumidifier, an electrical cleaner, a drying machine, a washing machine, an iron, a fan heater, a sewing machine, a hot-water-washing toilet seat, a lighting device, an electrical weighting scale, a manometer, a thermometer, a pedometer, a hearing aid, hairdressing and beauty electric appliances, a vending machine, a speaker frame, a BS antenna, and a VTR; building articles such as a roof, a floor, a shutter, a curtain rail, a flooring, a piping duct, a deck plate, a curtain wall, stairs, a door, a quake-free isolator, and a structural member; marine vessel articles such as an engine room, and an instrumentation room; automobile articles such as an engine (its oil pan, front cover, and lock cover), a car body (its dash, floor, door, roof, panel, and whirl house), a transmission, a parking brake cover, a sheet backrest, a sealing material, protecting members for car-mounted electronic parts, a car television, a car audio system, and a car navigation system; camera and office machinery articles such as a TV camera, a copying machine, a computer, a printer, a cash resistor, and a cabinet; industrial machinery articles such as power tools, a shooter, an elevator, an escalator, a conveyer, a tractor, a bulldozer, an electric generator, a compressor, a container, a hopper, a soundproof box, and a motor cover of a grass mower; railroad articles such as a roof, a side plate, a door, and a floor of a railroad vehicle, covers for various auxiliary machinery articles, and a bridge; a precision vibration-removal instrument for semiconductors and others; a soundproof member against low frequency sounds and high frequency sounds near aural range limits, and others.

### EXAMPLES

Hereinafter, specific working examples of the invention will be described together with comparative examples. However, the invention is not limited to the working examples.

In the working examples and the comparative examples, the word "part(s)" and the symbol "%" represent "part(s) by weight" and "% by weight", respectively. In the working example, "triamine" denotes pentamethyldiethylenetriamine.

In the working examples, any "weight-average molecular weight" and any "molecular weight distribution (ratio between weight-average molecular weight and number-average molecular weight" were each calculated out by a standard polystyrene conversion method using gel permeation chromatography (GPC). As GPC columns, columns filled with polystyrene crosslinked gel (shodex GPCs K-804, and K-802.5, manufactured by Showa Denko K.K.) were used. As a GPC solvent, chloroform was used. The number of functional groups introduced per molecule of any polymer was calculated out on the basis of concentration analysis by ¹H-NMR, and the number-average molecular weight thereof gained by GPC. For the NMR, a machine ASX-400 manufactured by Bruker Corp. was used, and deuterium chloroform was used as a solvent to make a measurement at 23°C.

### (Production Example 1)

### (Synthesis of a poly(n-butyl acrylate) having at a single terminal of each molecule thereof an acryloyl group)

### (1) Polymerization step

One hundred parts of n-butyl acrylate were deoxidized. The inside of a stirrer-attached reactor made of stainless steel was deoxidized. Thereto were charged 0.42 parts of cuprous bromide, and 20 parts of the whole of the deoxidized n-butyl acrylate, and then these components were heated and stirred. Thereto were added 4.4 parts of acetonitrile, and 1.9 parts of α-ethyl bromobutyrate as an initiator, and the components were mixed with each other. The temperature of the mixed liquid was adjusted to about 80°C. At this stage, thereto was added 0.018 parts of pentamethyldiethylenetriamine (hereinafter abbreviated to triamine) to start a polymerization reaction. Thereto were bit by bit added the remaining 80 parts of the n-butyl acrylate to advance the polymerization reaction. In the middle of the polymerization, triamine was appropriately added thereto to adjust the polymerization rate. The total amount of triamine used in the polymerization was 0.06 parts. The internal temperature is raised by polymerization heat when the polymerization advances; thus, the polymerization was advanced while the internal temperature was adjusted to about 80 to 90°C. When the monomer conversion rate (polymerization reaction rate) turned to about 95% or more, an oxygen-nitrogen mixed gas was introduced to a gas phase part of the reactor. While the internal temperature was kept at about 80 to 90°C, the reaction liquid was heated and stirred for several hours to bring the polymerization catalyst and oxygen in the reaction liquid into contact with each other. Acetonitrile and an unreacted portion of the monomer were volatized and removed under reduced pressure to yield a concentrate containing a polymer. The concentrate was in a remarkably colored state.

### (2) Purification step

Butyl acetate was used as a solvent for diluting the polymer. The polymer was diluted with about 100 parts by weight of butyl acetate, and a filtration auxiliary was added thereto. The liquid was heated and filtrated. Adsorbents (KYOWARD (transliterated) 700SEN, and KYOWARD 500SH) were added to the resultant filtrate, and then the liquid was filtrated to yield a clear liquid. The filtrate was concentrated to yield a substantially transparent and colorless polymer.

### (3) Acryloyl group (polymerizable carbon-carbon double bond) introducing step

Into the resultant polymer were dissolved about 100 parts by weight of N,N-dimethylacetoamide (DMAC). Thereto were added potassium acrylate (about 2 mole equivalents relative to the amount of the terminated Br groups), a heat stabilizer (H-TEMPO: 4-hydroxy-2,2,6,6-tetramethylpiperidine-n-oxyl), and an absorbent (KYOWARD 700SEN), and these components were heated and stirred at about 70°C for several hours. DMAC was distilled off under reduced pressure. The polymer concentrate was diluted with butyl acetate in an amount of about 100 parts by weight relative to the weight of the polymer. Thereto was added a filtration auxiliary, and a solid therein was filtrated off. The resultant filtrate was concentrated to yield a polymer [P1] having at a single terminal of each molecule thereof an acryloyl group as an ultraviolet crosslinkable group. The weight-average molecular weight Mw of the resultant polymer [P1] was 12760, and the molecular weight distribution thereof was 1.10. The average number of acryloyl groups introduced per molecule of the polymer was analyzed by ¹H NMR analysis. As a result, the number was about 1.0 (in other words, the percentage of the acryloyl-group-introduction into the individual single-terminals was about 100%). The glass-rubber transition temperature (Tg) of the polymer [P1] was -45°C from differential scanning calorimetry (DSC).

### (Production Example 2)

### (Synthesis of a poly(n-butyl acrylate) having at a single terminal of each molecule thereof an acryloyl group)

### (1) Polymerization step

One hundred parts of n-butyl acrylate were deoxidized. The inside of a stirrer-attached reactor made of stainless steel was deoxidized. Thereto were charged 0.95 parts of cuprous bromide, and 20 parts of the whole of the deoxidized n-butyl acrylate, and then these components were heated and stirred. Thereto were added 8.8 parts of acetonitrile, and 1.9 parts of α-ethyl bromobutyrate as an initiator, and the components were mixed with each other. The temperature of the mixed liquid was adjusted to about 80°C. At this stage, thereto was added 0.018 parts of pentamethyldiethylenetriamine (hereinafter abbreviated to triamine) to start a polymerization reaction. Thereto were bit by bit added the remaining 80 parts of the n-butyl acrylate to advance the polymerization reaction. In the middle of the polymerization, triamine was appropriately added thereto to adjust the polymerization rate. The total amount of triamine used in the polymerization was 0.17 parts. The internal temperature is raised by polymerization heat when the polymerization advances; thus, the polymerization was advanced while the internal temperature was adjusted to about 80 to 90°C. When the monomer conversion rate (polymerization reaction rate) turned to about 95% or more, an oxygen-nitrogen mixed gas was introduced to a gas phase part of the reactor. While the internal temperature was kept at about 80 to 90°C, the reaction liquid was heated and stirred for several hours to bring the polymerization catalyst and oxygen in the reaction liquid into contact with each other. Acetonitrile and an unreacted portion of the monomer were volatized and removed under reduced pressure to yield a concentrate containing a polymer. The concentrate was in a remarkably colored state.

### (2) Purification step

Butyl acetate was used as a solvent for diluting the polymer. The polymer was diluted with about 100 parts by weight of butyl acetate, and a filtration auxiliary was added thereto. The liquid was heated and filtrated. Adsorbents (KYOWARD (transliterated) 700SEN, and KYOWARD 500SH) were added to the resultant filtrate, and then the liquid was filtrated to yield a clear liquid. The filtrate was concentrated to yield a substantially transparent and colorless polymer.

### (3) Acryloyl group (polymerizable carbon-carbon double bond) introducing step

Into the resultant polymer were dissolved about 100 parts by weight of N,N-dimethylacetoamide (DMAC). Thereto were added potassium acrylate (about 2 mole equivalents relative to the amount of the terminated Br groups), a heat stabilizer (H-TEMPO: 4-hydroxy-2,2,6,6-tetramethylpiperidine-n-oxyl), and an absorbent (KYOWARD 700SEN), and these components were heated and stirred at about 70°C for several hours. DMAC was distilled off under reduced pressure. The polymer concentrate was diluted with butyl acetate in an amount of about 100 parts by weight relative to the weight of the polymer. Thereto was added a filtration auxiliary, and a solid therein was filtrated off. The resultant filtrate was concentrated to yield a polymer [P2] having at a single terminal of each molecule thereof an acryloyl group as an ultraviolet crosslinkable group. The weight-average molecular weight Mw of the resultant polymer [P2] was 25430, and the molecular weight distribution thereof was 1.10. The average number of acryloyl groups introduced per molecule of the polymer was analyzed by ¹H NMR analysis. As a result, the number was about 1.0 (in other words, the percentage of the acryloyl-group-introduction into the individual single-terminals was about 100%). The glass-rubber transition temperature (Tg) of the polymer [P2] was -45°C from differential scanning calorimetry (DSC).

### (Production Example 3)

### (Synthesis of a poly(n-butyl acrylate) having at a single terminal of each molecule thereof unreactive functional group)

### (1) Polymerization step

One hundred parts of n-butyl acrylate were deoxidized. The inside of a stirrer-attached reactor made of stainless steel was deoxidized. Thereto were charged 0.95 parts of cuprous bromide, and 20 parts of the whole of the deoxidized n-butyl acrylate, and then these components were heated and stirred. Thereto were added 8.8 parts of acetonitrile, and 1.9 parts of α-ethyl bromobutyrate as an initiator, and the components were mixed with each other. The temperature of the mixed liquid was adjusted to about 80°C. At this stage, thereto was added 0.018 parts of pentamethyldiethylenetriamine (hereinafter abbreviated to triamine) to start a polymerization reaction. Thereto were bit by bit added the remaining 80 parts of the n-butyl acrylate to advance the polymerization reaction. In the middle of the polymerization, triamine was appropriately added thereto to adjust the polymerization rate. The total amount of triamine used in the polymerization was 0.17 parts. The internal temperature is raised by polymerization heat when the polymerization advances; thus, the polymerization was advanced while the internal temperature was adjusted to about 80 to 90°C. When the monomer conversion rate (polymerization reaction rate) turned to about 95% or more, an oxygen-nitrogen mixed gas was introduced to a gas phase part of the reactor. While the internal temperature was kept at about 80 to 90°C, the reaction liquid was heated and stirred for several hours to bring the polymerization catalyst and oxygen in the reaction liquid into contact with each other. Acetonitrile and an unreacted portion of the monomer were volatized and removed under reduced pressure to yield a concentrate containing a polymer. The concentrate was in a remarkably colored state.

### (2) Purification step

Butyl acetate was used as a solvent for diluting the polymer. The polymer was diluted with about 100 parts by weight of butyl acetate, and a filtration auxiliary was added thereto. The liquid was heated and filtrated. Adsorbents (KYOWARD (transliterated) 700SEN, and KYOWARD 500SH) were added to the resultant filtrate, and then the liquid was filtrated to yield a clear liquid. The filtrate was concentrated to yield a substantially transparent and colorless polymer.

### (3) Step of introducing an unreactive functional group into a terminal of each molecule

Into the resultant polymer were dissolved about 100 parts by weight of N,N-dimethylacetoamide (DMAC). Thereto were added potassium acrylate (about 2 mole equivalents relative to the amount of the terminated Br groups), a heat stabilizer (H-TEMPO: 4-hydroxy-2,2,6,6-tetramethylpiperidine-n-oxyl), and an absorbent (KYOWARD 700SEN), and these components were heated and stirred at about 70°C for several hours. DMAC was distilled off under reduced pressure. The polymer concentrate was diluted with butyl acetate in an amount of about 100 parts by weight relative to the weight of the polymer. Thereto was added a filtration auxiliary, and a solid therein was filtrated off. The resultant filtrate was concentrated to yield a polymer [P3] having at a terminal of each molecule thereof a carbonyl group as an unreactive functional group. The weight-average molecular weight Mw of the resultant polymer [P3] was 25850, and the molecular weight distribution thereof was 1.14. The polymer [P3] did not react with the above-mentioned various reaction catalysts, and was a (meth)acrylic polymer in a mere linear polymer form. The average number of carbonyl groups introduced per molecule of the polymer was analyzed by ¹H NMR analysis. As a result, the number was about 1.0 (in other words, the percentage of the unreactive-functional-group-introduction into the individual single-terminals was about 100%). The glass-rubber transition temperature (Tg) of the polymer [P3] was -45°C from differential scanning calorimetry (DSC).

### (Production Example 4) (Synthesis of a branched polymer)

To 100 parts of the polymer [P1] yielded in Production Example 1 were added 0.2 parts of 2-hydroxy-2-methyl-1-phenyl-propane-1-one (DAROCURE 1173, manufactured by Ciba Specialty Chemicals Ltd.) and 0.1 parts of bis(2,4,6-trimethylbenzoyl)-phenylphosphine oxide (IRGACURE 819, manufactured by Ciba Specialty Chemicals Ltd.) as radical photoinitiators. The solid components were sufficiently dissolved, and the entire components were mixed with each other. An ultraviolet radiating device (LIGHT HAMMER 6, manufactured by Fusion UV systems Japan K.K.) was used to radiate ultraviolet rays to the solution into a totalized light quantity of 3000 mJ/cm² at a peak illuminance of 1300 mW/cm² to yield a polymer [P4] corresponding to a branched polymer (A). The average number of the remaining acryloyl groups per molecule of the polymer was analyzed by ¹H NMR. However, no remaining acryloyl groups were detected (in other words, the radical polymerization rate of the polymer [P1] was about 100%). The weight-average molecular weight Mw of the resultant polymer [P4] was 135882, and the molecular weight distribution thereof was 3.41. Since the weight-average molecular weight Mw of the precursor (polymer [P1]) of the branched polymer (A) was 12760, the average number of branches of the polymer [P4] was about 10.6. The glass-rubber transition temperature (Tg) of the polymer [P4] was -45°C from differential scanning calorimetry (DSC).

### (Production Example 5) (Synthesis of a branched polymer)

To 100 parts of the polymer [P2] yielded in Production Example 2 were added 0.2 parts of 2-hydroxy-2-methyl-1-phenyl-propane-1-one (DAROCURE 1173, manufactured by Ciba Specialty Chemicals Ltd.) and 0.1 parts of bis(2,4,6-trimethylbenzoyl)-phenylphosphine oxide (IRGACURE 819, manufactured by Ciba Specialty Chemicals Ltd.) as radical photoinitiators. The solid components were sufficiently dissolved, and the entire components were mixed with each other. An ultraviolet radiating device (LIGHT HAMMER 6, manufactured by Fusion UV systems Japan K.K.) was used to radiate ultraviolet rays to the solution into a totalized light quantity of 3000 mJ/cm² at a peak illuminance of 1300 mW/cm² to yield a polymer [P5] corresponding to a branched polymer (A). The average number of the remaining acryloyl groups per molecule of the polymer was analyzed by ¹H NMR. However, no remaining acryloyl groups were detected (in other words, the radical polymerization rate of the polymer [P1] was about 100%). The glass-rubber transition temperature (Tg) of the polymer [P5] was -45°C from differential scanning calorimetry (DSC). The weight-average molecular weight Mw of the resultant polymer [P5] was 449719, and the molecular weight distribution thereof was 7.16. Since the weight-average molecular weight Mw of the precursor (polymer [P2]) of the branched polymer (A) was 25430, the average number of branches of the polymer [P5] was about 17.6.

### (Production Example 6)

### (Method for producing an n-butyl acrylate polymer having at both terminals of each molecule thereof acryloyl groups, respectively)

### (1) Polymerization step

One hundred parts of n-butyl acrylate were deoxidized. The inside of a stirrer-attached reactor made of stainless steel was deoxidized. Thereto were charged 0.17 parts of cuprous bromide, and 20 parts of the whole of the deoxidized n-butyl acrylate, and then these components were heated and stirred. Thereto were added 4.4 parts of acetonitrile, and 3.5 parts of diethyl 2,5-dibromoadipate as an initiator, and these components were mixed with each other. The temperature of the mixed liquid was adjusted to about 80°C. At this stage, thereto was added 0.018 parts of pentamethyldiethylenetriamine (hereinafter abbreviated to triamine) to start a polymerization reaction. Thereto were bit by bit added the remaining 80 parts of the n-butyl acrylate to advance the polymerization reaction. In the middle of the polymerization, triamine was appropriately added thereto to adjust the polymerization rate. The total amount of triamine used in the polymerization was 0.09 parts. The internal temperature is raised by polymerization heat when the polymerization advances; thus, the polymerization was advanced while the internal temperature was adjusted to about 80 to 90°C. When the monomer conversion rate (polymerization reaction rate) turned to about 95% or more, an oxygen-nitrogen mixed gas was introduced to a gas phase part of the reactor. While the internal temperature was kept at about 80 to 90°C, the reaction liquid was heated and stirred for several hours to bring the polymerization catalyst and oxygen in the reaction liquid into contact with each other. Acetonitrile and an unreacted portion of the monomer were volatized and removed under reduced pressure to yield a concentrate containing a polymer. The concentrate was in a remarkably colored state.

### (2) Purification step

Butyl acetate was used as a solvent for diluting the polymer. The polymer was diluted with about 100 parts by weight of butyl acetate, and a filtration auxiliary was added thereto. The liquid was heated and filtrated. Adsorbents (KYOWARD (transliterated) 700SEN, and KYOWARD 500SH) were added to the resultant filtrate, and then the liquid was filtrated to yield a clear liquid. The filtrate was concentrated to yield a substantially transparent and colorless polymer.

### (3) Acryloyl group introducing step

Into the polymer were dissolved about 100 parts by weight of N,N-dimethylacetoamide (DMAC) relative to the weight of the polymer. Thereto were added potassium acrylate (about 2 mole equivalents relative to the amount of the terminated Br groups), a heat stabilizer (H-TEMPO: 4-hydroxy-2,2,6,6-tetramethylpiperidine-n-oxyl), and an absorbent (KYOWARD 700SEN), and these components were heated and stirred at about 70°C for several hours. DMAC was distilled off under reduced pressure. The polymer concentrate was diluted with butyl acetate in an amount of about 100 parts by weight relative to the weight of the polymer. Thereto was added a filtration auxiliary, and a solid therein was filtrated off. The resultant filtrate was concentrated to yield a polymer [P6] having at both terminals of each molecule thereof acryloyl groups, respectively, as ultraviolet crosslinkable group. The weight-average molecular weight Mw of the resultant polymer [P6] was about 14101, and the molecular weight distribution thereof was 1.19. The average number of acryloyl groups introduced per molecule of the polymer was analyzed by ¹H NMR analysis. As a result, the number was about 1.9. The glass-rubber transition temperature (Tg) of the polymer [P6] was - 45°C from differential scanning calorimetry (DSC).

### <Physical Property Evaluating Methods>

Physical properties of a cured product (test piece) produced in each of the working examples and the comparative examples were each measured by the following method under the following conditions:

### (Dynamic viscoelasticity)

The dynamic viscoelasticity is measurable, using a dynamic viscoelasticity meter DVA-200 (manufactured by IT Keisoku Seigyo (transliterated) Co.). A temperature-dispersive measurement thereof was made in a temperature range of -80 to 40°C under conditions that the angular velocity was 5 (1/sec), and the tensile strain was 0.05%.

The test piece was made into a sample form having a thickness of about 2 mm, a length of about 6.5 mm and a width of 5.5 mm. From the measurement, a change in the tangent loss (tanδ) depending on the temperature was able to be obtained, and the tangent loss was used as an index for the vibration-damping performance (damping performance). When a material is high in tangent loss tanδ, the dynamic viscoelasticity of the material is used to make it possible to dissipate dynamic energy given thereto in the form of heat or some other energy, thus attenuating the energy.

### (Differential scanning calorimetry (DSC))

The differential scanning calorimetry (DSC) is measurable using a device DSC-50 (manufactured by Shimadzu Corp.). The temperature-raising rate was set to 5°C/minute; and the temperature range, into -80 to 80°C. According to the DSC measurement, the glass-rubber transition temperature (Tg) was decided.

### (Example 1)

To 20 parts of the branched polymer [P4] yielded in Production Example 4 and 80 parts of the polymer [P6] yielded in Production Example 6 were added 1 part of an antioxidant IRGANOX 1010, and 0.1 parts of 2-hydroxy-2-methyl-1-phenyl-propane-1-one (DAROCURE 1173, manufactured by Ciba Specialty Chemicals Ltd.) and 0.05 parts of bis(2,4,6-trimethylbenzoyl)-phenylphosphine oxide (IRGACURE 819, manufactured by Ciba Specialty Chemicals Ltd.) as radical photoinitiators. The solid components were sufficiently dissolved, and the entire components were mixed with each other. Thereafter, this liquid was heated and defoamed at 60°C for 1 hour. Furthermore, the liquid was caused to flow into a frame, and then an ultraviolet radiating device (LIGHT HAMMER 6, manufactured by Fusion UV systems Japan K.K.) was used to radiate ultraviolet rays to the liquid into a totalized light quantity of 3000 mJ/cm² at a peak illuminance of 1300 mW/cm², thus yielding a rubbery cured product sheet having a thickness of 2 mm. This rubbery cured product sheet was a sheet merely containing the branched polymer [P4], and was not a sheet wherein the branched polymer [P4] was bonded to a crosslinked network originating from the polymer [P6]. The resultant rubbery cured product was used, and the dynamic viscoelasticity thereof was measured in a tensile mode. Thus, temperature-dispersive data thereabout were obtained. The result is shown in Table 1.

### (Example 2)

To 50 parts of the branched polymer [P4] yielded in Production Example 4 and 50 parts of the polymer [P6] yielded in Production Example 6 were added 1 part of an antioxidant IRGANOX 1010, and 0.1 parts of 2-hydroxy-2-methyl-1-phenyl-propane-1-one (DAROCURE 1173, manufactured by Ciba Specialty Chemicals Ltd.) and 0.05 parts of bis(2,4,6-trimethylbenzoyl)-phenylphosphine oxide (IRGACURE 819, manufactured by Ciba Specialty Chemicals Ltd.) as radical photoinitiators. The solid components were sufficiently dissolved, and the entire components were mixed with each other. Thereafter, this liquid was heated and defoamed at 60°C for 1 hour. Furthermore, the liquid was caused to flow into a frame, and then an ultraviolet radiating device (LIGHT HAMMER 6, manufactured by Fusion UV systems Japan K.K.) was used to radiate ultraviolet rays to the liquid into a totalized light quantity of 3000 mJ/cm² at a peak illuminance of 1300 mW/cm², thus yielding a rubbery cured product sheet having a thickness of 2 mm. This rubbery cured product sheet was a sheet merely containing the branched polymer [P4], and was not a sheet wherein the branched polymer [P4] was bonded to a crosslinked network originating from the polymer [P6]. The resultant rubbery cured product was used, and the dynamic viscoelasticity thereof was measured in a tensile mode. Thus, temperature-dispersive data thereabout were obtained. The result is shown in Table 1.

### (Example 3)

To 80 parts of the branched polymer [P4] yielded in Production Example 4 and 20 parts of the polymer [P6] yielded in Production Example 6 were added 1 part of an antioxidant IRGANOX 1010, and 0.1 parts of 2-hydroxy-2-methyl-1-phenyl-propane-1-one (DAROCURE 1173, manufactured by Ciba Specialty Chemicals Ltd.) and 0.05 parts of bis(2,4,6-trimethylbenzoyl)-phenylphosphine oxide (IRGACURE 819, manufactured by Ciba Specialty Chemicals Ltd.) as radical photoinitiators. The solid components were sufficiently dissolved, and the entire components were mixed with each other. Thereafter, this liquid was heated and defoamed at 60°C for 1 hour. Furthermore, the liquid was caused to flow into a frame, and then an ultraviolet radiating device (LIGHT HAMMER 6, manufactured by Fusion UV systems Japan K.K.) was used to radiate ultraviolet rays to the liquid into a totalized light quantity of 3000 mJ/cm² at a peak illuminance of 1300 mW/cm², thus yielding a rubbery cured product sheet having a thickness of 2 mm. This rubbery cured product sheet was a sheet merely containing the branched polymer [P4], and was not a sheet wherein the branched polymer [P4] was bonded to a crosslinked network originating from the polymer [P6]. The resultant rubbery cured product was used, and the dynamic viscoelasticity thereof was measured in a tensile mode. Thus, temperature-dispersive data thereabout were obtained. The result is shown in Table 1.

### (Example 4)

To 50 parts of the branched polymer [P5] yielded in Production Example 5 and 50 parts of the polymer [P6] yielded in Production Example 6 were added 1 part of an antioxidant IRGANOX 1010, and 0.1 parts of 2-hydroxy-2-methyl-1-phenyl-propane-1-one (DAROCURE 1173, manufactured by Ciba Specialty Chemicals Ltd.) and 0.05 parts of bis(2,4,6-trimethylbenzoyl)-phenylphosphine oxide (IRGACURE 819, manufactured by Ciba Specialty Chemicals Ltd.) as radical photoinitiators. The solid components were sufficiently dissolved, and the entire components were mixed with each other. Thereafter, this liquid was heated and defoamed at 60°C for 1 hour. Furthermore, the liquid was caused to flow into a frame, and then an ultraviolet radiating device (LIGHT HAMMER 6, manufactured by Fusion UV systems Japan K.K.) was used to radiate ultraviolet rays to the liquid into a totalized light quantity of 3000 mJ/cm² at a peak illuminance of 1300 mW/cm², thus yielding a rubbery cured product sheet having a thickness of 2 mm. This rubbery cured product sheet was a sheet merely containing the branched polymer [P5], and was not a sheet wherein the branched polymer [P5] was bonded to a crosslinked network originating from the polymer [P6]. The resultant rubbery cured product was used, and the dynamic viscoelasticity thereof was measured in a tensile mode. Thus, temperature-dispersive data thereabout were obtained. The result is shown in Table 1.

### (Example 5)

To 75 parts of the branched polymer [P5] yielded in Production Example 5 and 25 parts of the polymer [P6] yielded in Production Example 6 were added 1 part of an antioxidant IRGANOX 1010, and 0.05 parts of 2-hydroxy-2-methyl-1-phenyl-propane-1-one (DAROCURE 1173, manufactured by Ciba Specialty Chemicals Ltd.) and 0.025 parts of bis(2,4,6-trimethylbenzoyl)-phenylphosphine oxide (IRGACURE 819, manufactured by Ciba Specialty Chemicals Ltd.) as radical photoinitiators. The solid components were sufficiently dissolved, and the entire components were mixed with each other. Thereafter, this liquid was heated and defoamed at 60°C for 1 hour. Furthermore, the liquid was caused to flow into a frame, and then an ultraviolet radiating device (LIGHT HAMMER 6, manufactured by Fusion UV systems Japan K.K.) was used to radiate ultraviolet rays to the liquid into a totalized light quantity of 3000 mJ/cm² at a peak illuminance of 1300 mW/cm², thus yielding a rubbery cured product sheet having a thickness of 2 mm. This rubbery cured product sheet was a sheet merely containing the branched polymer [P5], and was not a sheet wherein the branched polymer [P5] was bonded to a crosslinked network originating from the polymer [P6]. The resultant rubbery cured product was used, and the dynamic viscoelasticity thereof was measured in a tensile mode. Thus, temperature-dispersive data thereabout were obtained. The result is shown in Table 1.

### (Comparative Example 1)

To 100 parts of the polymer [P6] yielded in Production Example 6 were added 1 part of an antioxidant IRGANOX 1010, and 0.2 parts of 2-hydroxy-2-methyl-1-phenyl-propane-1-one (DAROCURE 1173, manufactured by Ciba Specialty Chemicals Ltd.) and 0.1 parts of bis(2,4,6-trimethylbenzoyl)-phenylphosphine oxide (IRGACURE 819, manufactured by Ciba Specialty Chemicals Ltd.) as radical photoinitiators. The solid components were sufficiently dissolved, and the entire components were mixed with each other. Thereafter, this liquid was heated and defoamed at 60°C for 1 hour. Furthermore, the liquid was caused to flow into a frame, and then an ultraviolet radiating device (LIGHT HAMMER 6, manufactured by Fusion UV systems Japan K.K.) was used to radiate ultraviolet rays to the liquid into a totalized light quantity of 3000 mJ/cm² at a peak illuminance of 1300 mW/cm², thus yielding a rubbery cured product sheet having a thickness of 2 mm. The resultant rubbery cured product was used, and the dynamic viscoelasticity thereof was measured in a tensile mode. Thus, temperature-dispersive data thereabout were obtained. The result is shown in Table 1.

### (Comparative Example 2)

To 50 parts of the polymer [P1] yielded in Production Example 1 and 50 parts of the polymer [P6] yielded in Production Example 6 were added 1 part of an antioxidant IRGANOX 1010, and 0.2 parts of 2-hydroxy-2-methyl-1-phenyl-propane-1-one (DAROCURE 1173, manufactured by Ciba Specialty Chemicals Ltd.) and 0.1 parts of bis(2,4,6-trimethylbenzoyl)-phenylphosphine oxide (IRGACURE 819, manufactured by Ciba Specialty Chemicals Ltd.) as radical photoinitiators. The solid components were sufficiently dissolved, and the entire components were mixed with each other. Thereafter, this liquid was heated and defoamed at 60°C for 1 hour. Furthermore, the liquid was caused to flow into a frame, and then an ultraviolet radiating device (LIGHT HAMMER 6, manufactured by Fusion UV systems Japan K.K.) was used to radiate ultraviolet rays to the liquid into a totalized light quantity of 3000 mJ/cm² at a peak illuminance of 1300 mW/cm², thus yielding a rubbery cured product sheet having a thickness of 2 mm. The microstructure of this rubbery cured product sheet was a microstructure in which the polymer [P6] formed into a crosslinked network and further freely-hanging chains (the so-called dangling chains) originating from the polymer [P1] were bonded to the network.

The resultant rubbery cured product was used, and the dynamic viscoelasticity thereof was measured in a shear mode. Thus, temperature-dispersive data thereabout were obtained. The result is shown in Table 1.

### (Comparative Example 3)

To 50 parts of the polymer [P2] yielded in Production Example 2 and 50 parts of the polymer [P6] yielded in Production Example 6 were added 1 part of an antioxidant IRGANOX 1010, and 0.2 parts of 2-hydroxy-2-methyl-1-phenyl-propane-1-one (DAROCURE 1173, manufactured by Ciba Specialty Chemicals Ltd.) and 0.1 parts of bis(2,4,6-trimethylbenzoyl)-phenylphosphine oxide (IRGACURE 819, manufactured by Ciba Specialty Chemicals Ltd.) as radical photoinitiators. The solid components were sufficiently dissolved, and the entire components were mixed with each other. Thereafter, this liquid was heated and defoamed at 60°C for 1 hour. Furthermore, the liquid was caused to flow into a frame, and then an ultraviolet radiating device (LIGHT HAMMER 6, manufactured by Fusion UV systems Japan K.K.) was used to radiate ultraviolet rays to the liquid into a totalized light quantity of 3000 mJ/cm² at a peak illuminance of 1300 mW/cm², thus yielding a rubbery cured product sheet having a thickness of 2 mm. The microstructure of this rubbery cured product sheet was a microstructure in which the polymer [P6] formed into a crosslinked network and further freely-hanging chains (the so-called dangling chains) originating from the polymer [P2] were bonded to the network.

The resultant rubbery cured product was used, and the dynamic viscoelasticity thereof was measured in a tensile mode. Thus, temperature-dispersive data thereabout were obtained. The result is shown in Table 1.

### (Comparative Example 4)

To 60 parts of the polymer [P3] with unreactive functional group yielded in Production Example 3 and 40 parts of the polymer [P6] yielded in Production Example 6 were added 1 part of an antioxidant IRGANOX 1010, and 0.08 parts of 2-hydroxy-2-methyl-1-phenyl-propane-1-one (DAROCURE 1173, manufactured by Ciba Specialty Chemicals Ltd.) and 0.04 parts of bis(2,4,6-trimethylbenzoyl)-phenylphosphine oxide (IRGACURE 819, manufactured by Ciba Specialty Chemicals Ltd.) as radical photoinitiators. The solid components were sufficiently dissolved, and the entire components were mixed with each other. Thereafter, this liquid was heated and defoamed at 60°C for 1 hour. Furthermore, the liquid was caused to flow into a frame, and then an ultraviolet radiating device (LIGHT HAMMER 6, manufactured by Fusion UV systems Japan K.K.) was used to radiate ultraviolet rays to the liquid into a totalized light quantity of 3000 mJ/cm² at a peak illuminance of 1300 mW/cm², thus yielding a rubbery cured product sheet having a thickness of 2 mm. This cured product sheet was a material in which the polymer [P3] corresponding to an unreactive linear polymer was confined in a crosslinked rubber network originating from the polymer [P6].

The resultant rubbery cured product was used, and the dynamic viscoelasticity thereof was measured in a tensile mode. Thus, temperature-dispersive data thereabout were obtained. The result is shown in Table 1.

### (Comparative Example 5)

To 75 parts of the polymer [P3] with unreactive functional group yielded in Production Example 3 and 25 parts of the polymer [P6] yielded in Production Example 6 were added 1 part of an antioxidant IRGANOX 1010, and 0.05 parts of 2-hydroxy-2-methyl-1-phenyl-propane-1-one (DAROCURE 1173, manufactured by Ciba Specialty Chemicals Ltd.) and 0.025 parts of bis(2,4,6-trimethylbenzoyl)-phenylphosphine oxide (IRGACURE 819, manufactured by Ciba Specialty Chemicals Ltd.) as radical photoinitiators. The solid components were sufficiently dissolved, and the entire components were mixed with each other. Thereafter, this liquid was heated and defoamed at 60°C for 1 hour. Furthermore, the liquid was caused to flow into a frame, and then an ultraviolet radiating device (LIGHT HAMMER 6, manufactured by Fusion UV systems Japan K.K.) was used to radiate ultraviolet rays to the liquid into a totalized light quantity of 3000 mJ/cm² at a peak illuminance of 1300 mW/cm², thus yielding a rubbery cured product sheet having a thickness of 2 mm. This cured product sheet was a material in which the polymer [P3] corresponding to an unreactive linear polymer was confined in a crosslinked rubber network originating from the polymer [P6]. The resultant rubbery cured product was used, and the dynamic viscoelasticity thereof was measured in a tensile mode. Thus, temperature-dispersive data thereabout were obtained. The result is shown in Table 1.

**[Table 1]**

| | | Weight-average molecular weight Mw | Molecular weight distribution Mw/Mn | Tg (DSC) °C | Example | | | | | Comparative Example | | | | |
|---|---|---|---|---|---|---|---|---|---|---|---|---|---|---|
| | | | | | 1 | 2 | 3 | 4 | 5 | 1 | 2 | 3 | 4 | 5 |
| Composition/the number of parts | Polymer [P1] | 12760 | 1.10 | -45 | 0 | 0 | 0 | 0 | 0 | 0 | 50 | 0 | 0 | 0 |
| | Polymer [P2] | 25430 | 1.10 | -45 | 0 | 0 | 0 | 0 | 0 | 0 | 0 | 50 | 0 | 0 |
| | Polymer [P3] | 25850 | 1.14 | -45 | 0 | 0 | 0 | 0 | 0 | 0 | 0 | 0 | 60 | 75 |
| | Polymer [P4] + branched polymer (A) | 135882 | 3.41 | -45 | 20 | 50 | 80 | 0 | 0 | 0 | 0 | 0 | 0 | 0 |
| | Polymer [P5] + branched polymer (A) | 449719 | 7.16 | -45 | 0 | 0 | 0 | 50 | 75 | 0 | 0 | 0 | 0 | 0 |
| | Polymer [P6] | 14101 | 1.19 | -45 | 80 | 50 | 20 | 50 | 25 | 100 | 50 | 50 | 40 | 25 |
| Dynamic viscoelasticity (temperature-dispersive measurement) Measured frequency: 5 (1/sec) | tan δ (-20°C) | - | - | - | 0.70 | 0.89 | 1.15 | 0.80 | 0.85 | 0.63 | 0.74 | 0.70 | 0.80 | 0.62 |
| | tan δ (-10°C) | - | - | - | 0.65 | 0.85 | 1.03 | 0.70 | 0.73 | 0.38 | 0.57 | 0.65 | 0.68 | 0.90 |
| | tan δ (0°C) | - | - | - | 0.55 | 0.67 | 1.27 | 0.85 | 1.10 | 0.15 | 0.34 | 0.60 | 0.46 | 1.00 |
| | tan δ (10°C) | - | - | - | 0.37 | 0.40 | 1.35 | 0.91 | 1.20 | 0.05 | 0.15 | 0.40 | 0.33 | 0.55 |
| | tan δ (20°C) | - | - | - | 0.25 | 0.25 | 1.15 | 0.75 | 0.85 | 0.02 | 0.08 | 0.15 | 0.17 | 0.16 |

As shown in Table 1, it is understood that the damping materials of Examples 1 to 5, which each contain a branched polymer, are remarkably good in vibration-damping performance (tangent loss tanδ: 0.25 or more) particularly against vibrations in a low frequency range (5 Hz in these examples) in a temperature range near room temperature (-20 to 20°C). While the respective tangent losses tanδ of the comparative examples are less than 0.2, particularly, in the temperature range of 20°C while those of Examples 1 to 5 are 0.25 or more therein. Thus, Examples 1 to 5 are clearly suitable as damping material. Examples 1, 2 and 3 are different from Examples 4 and 5 in the molecular weight of branches of the used branched polymer. As the molecular weight of the branches of the branched polymer is higher, the damping material (containing this polymer) is higher in vibration-damping performance against low frequency vibrations at higher temperatures as described in the specification. As the branched polymer content by percentage is higher, the material is higher in vibration-damping performance (Example 5).

By contrast, it is understood that Comparative Examples 1 to 5 are insufficient in vibration-damping performance (tangent loss tanδ is not more than values of 0.02 to 0.17) against vibrations in a low frequency range (5 Hz in these examples) in a temperature range near room temperature (20°C). In many cases, any damping material is generally used at or near room temperature; thus, the low vibration-damping performance at or near 20°C is a serious problem.

Example 2 and Comparative Example 2 are further compared with each other. Example 2 contains 50 parts of a branched polymer while Comparative Example 2 contains 50 parts of a component corresponding to freely-hanging chains in a crosslinked network. Although these component, which exhibit vibration-damping performance, are equal to each other in quantity, it is understood that Example 2 is better in vibration-damping performance (larger in tangent loss tanδ value), particularly, against vibrations in a low frequency range (5 Hz in these examples) in a temperature range near room temperature (-20 to 20°C).

This denotes that a material in a rubber, gel or resin state remarkably exhibits vibration-damping performance merely by incorporating a branched polymer thereinto. This is not affected by whether or not the branched polymer is bonded to a crosslinked network structure. It is therefore unnecessary to select a reaction system for making the material into a rubber, gel or resin state. The material may be selected at will, and can be designed with a very high flexibility. The same matter is applicable to Example 4 and Comparative Example 3.

The composition of the invention for damping material, which contains a (meth)acrylic polymer, can give a material having a good weather resistance of the (meth)acrylic polymer and showing a required excellent viscoelastic behavior. Specifically, a cured product in a resin, rubber or gel state which is the damping material of the invention exhibits a high vibration-damping (energy-attenuating) performance against vibrations in a low frequency range (several hertz) or a higher frequency range in a specific temperature range near room temperature (-20 to 20°C). Thus, such a cured product material can be controlled in vibration-damping performance that has not been easily controlled hitherto, which is performance against vibrations in a low frequency range at room temperature or higher, so as to be suitable for damping material required to have a higher performance.

### INDUSTRIAL APPLICABILITY

The invention produces an effect of improving a vibration-damping performance as in the present working examples. Additionally, a branched polymer can be added to a base material that may be of various types for individual use purposes. Thus, physical properties, such as impact relieving performance and vibration-damping performance, are expected to be designed with a high flexibility. The invention can be used suitably for a rheology adjustor, impact absorbing material, pressure dispersing material, damping material, vibrationproof material, packaging material, soundproof material, sound absorbing material, sound shielding material, and others.

## Claims

1. A composition for damping material, comprising a branched polymer (A), and a resin (B), wherein the content by percentage of the branched polymer (A) is from 15 to 85% both inclusive by weight for 100% by weight of the total of the branched polymer (A) and resin (B), and the resin (B) is a chemically crosslinked body and/or a physically crosslinked body.

2. The composition for damping material according to claim 1, wherein the branched polymer (A) is a (meth)acrylic polymer.

3. The composition for damping material according to claim 1 or 2, wherein the branched polymer (A) is a comb polymer, or an irregularly-branched statistic polymer.

4. The composition for damping material according to any one of claims 1 to 3, wherein the branched polymer (A) has a weight-average molecular weight (Mw) of 10000 or more, the molecular weight being measured by gel permeation chromatography (GPC) and being a molecular weight in terms of that of polystyrene.

5. The composition for damping material according to any one of claims 1 to 4, wherein the resin (B) is a (meth)acrylic polymer.

6. The composition for damping material according to any one of claims 1 to 5, wherein the resin (B) has a crosslinkable functional group.

7. A rheology adjustor, comprising the branched polymer (A).

8. The rheology adjustor according to claim 7, wherein the branched polymer (A) is a comb polymer, or an irregularly-branched statistic polymer.

9. The rheology adjustor according to claim 7 or 8, wherein the branched polymer (A) is a (meth)acrylic polymer.

10. The rheology adjustor according to claims 7 to 9, wherein the branched polymer (A) has a weight-average molecular weight (Mw) of 10000 or more, the molecular weight being measured by gel permeation chromatography (GPC) and being a molecular weight in terms of that of polystyrene.

## Patentansprüche

1. Zusammensetzung für Dämpfungsmaterial, umfassend ein verzweigtes Polymer (A) und ein Harz (B), wobei der prozentuale Gehalt des verzweigten Polymers (A) von jeweils einschließlich 15 bis 85 % pro 100 Gewichts-% der Summe des verzweigten Polymers (A) und des Harzes (B) beträgt, und das Harz (B) ein chemisch quervernetzter Körper und/oder ein physikalisch quervernetzter Körper ist.

2. Zusammensetzung für Dämpfungsmaterial nach Anspruch 1, wobei das verzweigte Polymer (A) ein (Meth)acrylpolymer ist.

3. Zusammensetzung für Dämpfungsmaterial nach Anspruch 1 oder 2, wobei das verzweigte Polymer (A) ein Kammpolymer oder ein unregelmäßig verzweigtes statistisches Polymer ist.

4. Zusammensetzung für Dämpfungsmaterial nach einem der Ansprüche 1 bis 3, wobei das verzweigte Polymer (A) ein Gewichtsmittel des Molekulargewichtes (Mw) von 10.000 oder mehr aufweist, wobei das Molekulargewicht in Bezug auf das von Polystyrol mittels Gelpermeationschromatographie (GPC) gemessen ist.

5. Zusammensetzung für Dämpfungsmaterial nach einem der Ansprüche 1 bis 4, wobei das Harz (B) ein (Meth)acrylpolymer ist.

6. Zusammensetzung für Dämpfungsmaterial nach einem der Ansprüche 1 bis 5, wobei das Harz (B) eine quervernetzbare funktionelle Gruppe aufweist.

7. Rheologieeinsteller, umfassend das verzweigte Polymer (A).

8. Rheologieeinsteller nach Anspruch 7, wobei das verzweigte Polymer (A) ein Kammpolymer oder ein unregelmäßig verzweigtes statistisches Polymer ist.

9. Rheologieeinsteller nach Anspruch 7 oder 8, wobei das verzweigte Polymer (A) ein (Meth)acrylpolymer ist.

10. Rheologieeinsteller nach einem der Ansprüche 7 bis 9, wobei das verzweigte Polymer (A) ein Gewichtsmittel des Molekulargewichtes (Mw) von 10.000 oder mehr aufweist, wobei das Molekulargewicht in Bezug auf das von Polystyrol mittels Gelpermeationschromatographie (GPC) gemessen ist.

## Revendications

1. Composition pour matériau d'amortissement, comprenant un polymère ramifié (A), et une résine (B), dans laquelle la teneur en pourcentage du polymère ramifié (A) est de 15 à 85 % tous deux inclus en masse pour 100 % en masse du total du polymère ramifié (A) et de la résine (B), la résine (B) est un corps chimiquement réticulé et/ou un corps physiquement réticulé.

2. Composition pour matériau d'amortissement selon la revendication 1, dans laquelle le polymère ramifié (A) est un polymère (méth)acrylique.

3. Composition pour matériau d'amortissement selon la revendication 1 ou 2, dans laquelle le polymère ramifié (A) est un polymère en peigne, ou un polymère statistique irrégulièrement-ramifié.

4. Composition pour matériau d'amortissement selon l'une quelconque des revendications 1 à 3, dans laquelle le polymère ramifié (A) présente une masse moléculaire moyenne en masse (Mw) de 10 000 ou supérieure, la masse moléculaire étant mesurée par chromatographie par perméation sur gel (GPC) et étant une masse moléculaire en termes de celle de polystyrène.

5. Composition pour matériau d'amortissement selon l'une quelconque des revendications 1 à 4, dans laquelle la résine (B) est un polymère (méth)acrylique.

6. Composition pour matériau d'amortissement selon l'une quelconque des revendications 1 à 5, dans laquelle la résine (B) présente un groupe fonctionnel réticulable.

7. Ajusteur de rhéologie, comprenant le polymère ramifié (A).

8. Ajusteur de rhéologie selon la revendication 7, dans lequel le polymère ramifié (A) est un polymère en peigne, ou un polymère statistique irrégulièrement-ramifié.

9. Ajusteur de rhéologie selon la revendication 7 ou 8, dans lequel le polymère ramifié (A) est un polymère (méth)acrylique.

10. Ajusteur de rhéologie selon les revendications 7 à 9, dans lequel le polymère ramifié (A) présente une masse moléculaire moyenne en masse (Mw) de 10 000 ou supérieure, la masse moléculaire étant mesurée par chromatographie par perméation sur gel (GPC) et étant une masse moléculaire en termes de celle de polystyrène.
